(19) Europäisches Patentamt
European Patent Office
Office européen des brevets

(11) EP 0 733 236 B1

(12) EUROPEAN PATENT SPECIFICATION

(45) Date of publication and mention of the grant of the patent: **06.08.2003 Bulletin 2003/32**

(21) Application number: **95904861.2**

(22) Date of filing: **09.12.1994**

(51) Int Cl.[7]: **G06F 15/16**, G06F 12/06

(86) International application number: **PCT/US94/14183**

(87) International publication number: **WO 95/016239 (15.06.1995 Gazette 1995/25)**

# (54) MEMORY ADDRESSING FOR MASSIVELY PARALLEL PROCESSING SYSTEMS

SPEICHERADRESSIERUNG FÜR EIN MASSIVPARALLELES VERARBEITUNGSYSTEM

ADRESSAGE DE MEMOIRE POUR DES SYSTEMES PROCESSEURS A PARALLELISME MASSIF

(84) Designated Contracting States:
**DE FR GB**

(30) Priority: **10.12.1993 US 165118**
**10.12.1993 US 165388**

(43) Date of publication of application:
**25.09.1996 Bulletin 1996/39**

(73) Proprietor: **Silicon Graphics, Inc.**
**Mountain View, CA 94043 (US)**

(72) Inventors:
- **OBERLIN, Steven, M.**
  **Chippewa Falls, WI 54729 (US)**
- **EBERHART, Janet, M.**
  **St. Paul, MN 55104 (US)**
- **ELSESSER, Gary, W.**
  **Richfield, MN 55423 (US)**
- **FROMM, Eric, C.**
  **Eau Claire, WI 55703 (US)**
- **MACDONALD, Thomas, A.**
  **Minneapolis, MN 55409 (US)**
- **PASE, Douglas, M.**
  **Burnsville, MN 55306 (US)**
- **PASSINT, Randall, S.**
  **Chippewa Falls, WI 54729 (US)**

(74) Representative:
**Beresford, Keith Denis Lewis et al**
**BERESFORD & Co.**
**2-5 Warwick Court,**
**High Holborn**
**London WC1R 5DH (GB)**

(56) References cited:
**EP-A- 0 570 729**
**WO-A-91/10194**
**WO-A-91/10200**

- **COMPCON SPRING '93, 22 February 1993, SAN FRANCISCO, CA, US pages 312 - 320, XP379061 BRADLEY R. CARLILE 'Algorithms and design: The CRAY APP shared-memory system'**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 733 236 B1

## Description

### Field of the Invention

The present invention relates generally to massively parallel processing systems, and more particularly to a system and method of addressing which facilitates the reorganization and redistribution of blocks of data between global and local memory in a distributed memory massively parallel processing system

### Background of the Invention

Massively parallel processing involves the utilization of hundreds or thousands of processing elements (PEs) linked together by high speed interconnect networks. Typically, each PE includes a processor, local memory and an interface circuit connecting the PE to the interconnect network. A distributed memory massively parallel processing (MPP) system is one wherein each processor has a favored low latency, high bandwidth path to one or more local memory banks, and a longer latency, lower bandwidth access over the interconnect network to memory banks associated with other processing elements (remote or global memory), In globally addressed distributed memory systems, all memory is directly addressable by any processor in the system Since data residing in a processor's local memory can be accessed by that processor much faster than can data residing in the memory local to another processor, an incentive is therefore created for a placement of data which enhances locality. Typically, however, data distribution is limited within such MPP systems to a particular stride or to the placement of contiguous blocks of data. There is therefore a need in the art for a flexible addressing scheme which enhances locality for a variety of different processing tasks by efficiently and flexibly distributing data among a group of PEs.

The need to efficiently move blocks of data between local and global memory becomes even more apparent when attempting to optimize performance through the use of cache memory. Spatial coherence, the tendency for successive references to access data in adjacent memory locations, plays a major role in determining cache performance. Poor spatial coherence may exist if the access sequence to a given data structure is accomplished via a large stride (e.g., when accessing a two dimensional Fortran array by rows) or in a random or sparse fashion (e.g., indirect accesses, irregular grids). To achieve good performance, data often must be rearranged from a multitude of different large stride or sparse organizations to a unit stride organization. Furthermore, such a reorganization may require the shifting of data between remote and local memory.

One attempt to improve data handling is demonstrated in European Patent Application EP 570.729, entitled "APAP I/O Programmable Router". In that patent application a parallel array processor for massively parallel applications is formed using low power CMOS with DRAM processing on a single chip. The chip merges processor and memory with multiple processor memory elements (PMEs) and is capable of dynamically switching modes. However, this chip emphasizes PME-based operations having specialized hardware to perform the data transfer functions.

Therefore, in addition to a flexible addressing approach to distributed data in an MPP system, there is a need for an efficient memory mapping of the global address to a local memory address within a PE. In particular, there is a need in the art for a mechanism which supports the above flexible addressing scheme and yet. at the same time, facilitates the reading and storing of data between local and global memory blocks in a massively parallel distributed memory processing system. The support mechanism should allow scatter-gather capabilities in addition to constant strides to facilitate reorganization of sparse or randomly organized data. The mechanism should also be easily directed by the user for adaptation to different types of processing tasks.

### Summary of the Invention

To overcome limitations in the art described above and to overcome the present specification, the present invention provides a system and address other limitations that will become apparent upon reading and understanding method for extracting a PE number and offset from an array index.

According to one aspect of the present invention, there is provided, in a computing system having a plurality of processing elements, including a first processing element, wherein each processing element includes a processor and a local memory and wherein each local memory includes a plurality of memory locations, a method of addressing a first array element within an array having a plurality of array elements distributed according to a distribution specification across one or more of the plurality of processing elements, the method comprising the steps of

assigning a processing element number to each processing element;
assigning a local memory address to each memory location;
assigning a linearized index to each array element, wherein each linearized index comprises a plurality of bits and wherein the step of assigning a linearized index includes the step of assigning a first linearized index to the first array element;
computing, as a function of the first linearized index and the distribution specification, the processing element number of the processing element where the first array element is stored; and
computing, as a function of the first linearized index and the distribution specification, the local memory address of the memory location in which the first array element is stored

According to another aspect of the present invention, there is provided, in a computing system having a plurality of processing elements, including a first processing element, wherein each processing element includes a processor and a local memory and wherein each local memory includes a plurality of memory locations, a method of addressing a first array element within a multidimensional array having a plurality of array elements, wherein the plurality of array elements are distributed according to a distribution specification across one or more of the plurality of processing elements and wherein the first array element is stored on the first processing element, the method comprising the steps of:

assigning a processing element number to each processing element;
assigning a local memory address for each memory location;
determining the processing element number and the local memory address associated with the memory location in which the first array element is stored, wherein the step of determining comprises the steps of:

separating a linearized index associated with the first array element into a plurality of dimension fields, wherein each dimension field is associated with a particular array dimension;
separating each dimension field into a processing element field and a block field;
concatenating the processing element fields from each of the dimension fields in a predetermined order to form the processing element number;
concatenating the block fields from each of the dimension fields in a predetermined order to form a local offset; and
adding a local base address to the local offset to form the local memory address of the memory location in which the first array element is stored.

According to another aspect of the present invention, there is provided a computing system, comprising:

a plurality of processing elements, including a first processing element,
wherein each processing element comprises:

a processor; and
a local memory, wherein each local memory includes a plurality of memory locations; and

an interconnection network connecting the plurality of processing elements;

wherein the processing elements further comprise transferring means for transferring data stored in the local memory of a processing element to the local memory of another processing element, wherein the transferring means comprise an address centrifuge, the address centrifuge comprising:

means for computing, as a function of a mask word and a linearized index associated with a first array element, a processing element number, and
means for computing, as a function of the mask word and linearized index, the local memory address of the memory location in which the first array element is stored

According to yet another aspect of the present invention, there is provided, in a computing system having a plurality of processing elements, wherein each processing element includes a local memory having a plurality of local memory locations, including a first local memory location, a method of addressing a first array element of a plurality of array elements, wherein the first array element is stored in the first memory location of a particular processing element, wherein each array element is associated with a Linearized index, and wherein each linearized index comprises P processing element number bits and L local memory offset bits, the method comprising the steps of:

generating a mask word, wherein the mask word has P + L mask word bits; and
centrifuging the mask word and linearized index to obtain a processing element number associated with the particular processing element and a local memory address associated with the first memory location.

According to yet another aspect of the present invention, there is provided an address centrifuge for a computing system having a plurality of processing elements, comprising:

means for receiving a mask word associated with an array;
means for receiving a linearized index associated with an element of the array;
means for computing, as a function of the mask word and linearized index, a processing element number, wherein the processing element number is the number of the processing element at which the element is stored; and
means for computing, as a function of the mask word and linearized index, the memory address at which the element is stored within that processing element.

According to yet another aspect of the present invention, there is provided a processing element for a computing system having a plurality of processing elements, comprising:

a processor;
memory including a plurality of memory locations;
transferring means for transferring data with another processing element in the computer system, wherein the transferring means comprises an address centrifuge according the previous aspect of the invention.

**Brief Description of the Drawings**

The foregoing and other aspects, features and advantages of the invention, as well as the presently preferred embodiments thereof, will become apparent upon reading and understanding the following detailed description and accompanying drawings in which:

FIGURE 1 shows a simplified block diagram of a representative MPP system with which the present centrifuge operation can be used;
FIGURE 2 shows a block diagram of a processing element (PE), including a processor, its associated shell circuitry, and local memory;
FIGURE 3A-E are examples of array element distributions for given data distribution selections;
FIGURE 4A shows a functional block diagram of a global address calculation
FIGURE 4B shows a functional block diagram of one embodiment of a global address calculation with hardware assistance;
FIGURE 4C shows a functional block diagram of one embodiment of a global address calculation in sofware;
FIGURE 5 illustrates the separation of the linearized index into a PE number and local offset;
FIGURE 6 shows the fields in a centrifuge mask for an N-dimensional array;
FIGURE 7A shows a shared data descriptor (SDD) table;
FIGURE 7B illustrates dimension information fields within the SDD table of FIGURE 7A;
FIGURE 8 shows a first embodiment of the hardware design of a serial version of the centrifuge;
FIGURE 9 shows an alternate preferred embodiment of the hardware design of the centrifuge;
FIGURES 10A-10E show a more detailed block diagram of left shift register 312;
FIGURE 11 shows a functional block diagram of one embodiment of a modified centrifuge operation;
FIGURE 12 shows a functional block diagram of one embodiment of an 8-bit fully recursive centrifuge; and
FIGURE 13 shows a top level block diagram of one embodiment of a recursive address centrifuge; and
FIGURE 14 shows a block diagram of the use of the address centrifuge in a block transfer engine.

**DETAILED DESCRIPTION OF THE PREFERRED EMBODIMENT**

In the following detailed description of the preferred embodiment, reference is made to the accompanying drawings which form a part hereof, and in which is shown by way of illustration a specific embodiment in which the invention may be practiced. It is to be understood that other embodiments may be utilized and structural changes made without departing from the scope of the present invention.

The preferred MPP system is a MIMD massively parallel processing system with a physically distributed, globally addressable memory. A representative massively parallel processor (MPP) system 100 is shown in FIGURE 1. The MPP system 100 contains hundreds or thousands of processing elements 101, wherein each processing element 101 comprise a processor 102, connected to a local memory 104 and associated support circuitry (not shown). The PE's in the MPP system 100 are linked via an interconnect network 106.

The preferred MPP system 100 has a physically distributed globally addressed memory, wherein each processor 102 has a favored, low latency, high bandwidth path to a local memory 104, and a longer latency lower bandwidth access to the memory banks 104 associated with other processors 102 over the interconnect network 106. In the preferred embodiment, the interconnect network 106 is comprised of a 3-dimensional torus which, when connected, creates a 3-dimensional matrix of PEs. The torus design has several advantages, including high speed information transfers and the ability to avoid bad communication links. A toroidal interconnect network is also scalable in all three dimensions.

FIGURE 2 shows a simplified block diagram of one embodiment of a PE 101. In such an embodiment, an individual PE 101 includes a high-performance RISC (reduced instruction set computer) microprocessor 202. In the preferred MPP system, microprocessor 202 is the DECChip 21064-AA RISC microprocessor, available from Digital Equipment Corporation. Each microprocessor 202 is coupled to a local memory 204 that is a distributed portion of the globally-addressable system memory. Each PE 101 further includes a shell of circuitry that implements synchronization and communication functions facilitating interactions between processors.

The shell circuitry includes an interconnection network router 206, used to connect multiple PEs 101 in a three-dimensional toroidal "fabric". The toroidal interconnect network carries all data communicated between PEs and memories that are not local. In the embodiment shown, an optional block transfer engine 208 in the PE shell circuitry permits asynchronous (i.e., independent of the local processor) movement of data, such as block transfers, between the local memory 204 and remote memories associated with other PEs 200, while providing flexible addressing modes that permit a high degree of control over the redistribution of data between the shared portions of the system memory. In one such embodiment, a separate hardware-implemented address centrifuge is associated with the block transfer engine 208. However, it shall be understood that the centrifuge operation can be used to generate global addresses with or without special hardware support. The implementation of the centrifuge within the block transfer engine is for purposes of illustration only, and is not a limitation of the present invention.

The shell circuitry also includes a data prefetch queue 210 which allows microprocessor 202 to directly initiate data movement between remote memories and the local processor in a way that can hide access latency and permit multiple remote memory references to be outstanding.

Synchronization circuits in the shell permit synchronization at various different levels of program or data granularity in order to best match the synchronization method that is "natural" for a given parallelization technique. At the finest granularity, data-level synchronization is facilitated by an atomic swap mechanism that permits the locking of data on an element-by-element basis. A more coarse grain data-level synchronization primitive is provided by a messaging facility, which permits a PE to send a packet of data to another PE and cause an interrupt upon message arrival, providing for the management of message queues and low-level messaging protocol in hardware. Control-level synchronization at the program loop level is provided by a large set of globally accessible fetch-and-increment registers that can be used to dynamically distribute work (in the form of iterations of a loop, for instance) among processors at run time. Yet another form of control-level synchronization, barrier synchronization, is useful to control transitions between major program blocks (i.e., between loops performing actions on the same data sets).

## Data Distribution

An important concept in a distributed memory MPP system such as the one described herein is the fact that different processing tasks may profit from very different data distributions for most efficient processing performance. The present invention provides a system and method which allows the programmer to easily designate the optimal distribution of data in memory for a particular processing task.

The global address model permits data objects, such as scalars or arrays, distributed across all of the PEs, to be viewed as if there were a single address space. In one embodiment, data distribution is defined through a set of directives that indicate how a data object is distributed. Directives are used to aid portability and allow for migration to future standards for parallel execution. The directives are defined to allow dimensions of a shared array to be distributed in different manners. In one such embodiment, the declaration of a dimensionally distributed array is used to specify the distribution of array elements within each dimension and each dimension is distributed as if it were independent from all other dimensions. A programmer, therefore, has great flexibility in distributing data to increase the locality of data references.

In one such embodiment, distribution within each dimension is controlled by the distribution specifiers :BLOCK (N), :BLOCK and :. The distribution specifier :BLOCK(N) specifies a distribution in which N contiguous array elements are placed within a block, and the blocks are distributed among the assigned PEs. N is therefore the block size, or number of array elements in each block, of the distribution. In such a distribution, each PE owns the same number of blocks.

The distribution specifier :BLOCK specifies a block distribution where each PE owns exactly one block of contiguous elements. The distribution specifier : specifies a degenerate distribution in that dimension. That is, an entire dimension is distributed so that it is resident on a single PE.

FIGURE 3A illustrates the :BLOCK(N) distribution of a thirteen element single-dimension array distributed across 4 PEs. In this example, block-size N is equal to one. Such a distribution may be requested using the following lines of parallel Fortran code:

```
REAL A(13)

CDIR$     SHARED A( :BLOCK(1))
```

This kind of distribution is often referred to as a cyclic distribution because the elements of array A cycle individually through the PEs. That is, the elements of A are distributed so that contiguous elements are on adjacent PEs. It should be noted that space is left for unassigned array elements 14 through 16. In the preferred embodiment, unassigned elements are allocated automatically in order to round the extent of each array dimension to a power of two

FIGURE 3B illustrates the same array A but with a block-size N equal to two. Such distribution could be requested using the following parallel Fortran statements:

```
REAL A(13)

CDIR$     SHARED A( :BLOCK(2) )
```

This distribution places two contiguous elements in each block. As can be seen by comparing FIGURES 3A and 3B, such a distribution places a majority of the elements of A on different PEs than in the :BLOCK(1) distribution of FIGURE 3A Also, the unassigned elements are placed on different PEs.

FIGURE 3C illustrates the default data distribution when a value of N is not specified. Such a distribution could be requested using the following parallel Fortran statements:

```
REAL A(13)

CDIR$     SHARED A( :BLOCK )
```

The block size for the :BLOCK distribution is such that a single contiguous block is assigned to each PE. That is, N is set to the extent of the dimension (rounded up to a power of two) divided by the number of PEs assigned to that dimension. Typically, the number of PEs assigned to a dimension is restricted to a power of 2 in order to make such calculations easier.

As stated above, each dimension of a multidimensional array can be distributed separately. FIGURE 3E illustrates a two-dimensional array where both dimensions are distributed separately. Such a distribution could be requested using the following parallel Fortran statements:

```
REAL D(8,8)

CDIR$     SHARED D(:BLOCK, :BLOCK)
```

In the example shown in FIGURE 3E, array D is distributed across 16 PEs. When both dimensions of a two-dimensional array are distributed, the number of PEs is factored such that each dimension i is assigned a number of PEs, P[i]. In one embodiment, P[i] is restricted to being a power of two. As can be seen, each dimension has its own block size (B[i]). Since both dimensions of array D are distributed with the :BLOCK distribution, the block size is computed as follows:

$$B[1]=E[1]/P[1]$$

$$B[2]=E[2]/P[2]$$

where E[i] is the extent of dimension i and P[i] is the number of PEs assigned to that dimension.

As stated above, each dimension of a multidimensional array can be distributed in a different manner. FIGURE 3D illustrates a degenerate distribution in one dimension of a two-dimensional array and a default distribution in the second dimension. Such a two-dimensional array can be created and distributed in the following manner:

REAL A(2,13)

CDIR$ SHARED A(:,:BLOCK)

The degenerate distribution allows an entire dimension to be assigned to one PE. This is useful when, for example, locality can be enhanced by placing an entire row or column of an array on a single PE. FIGURE 3D illustrates the situation where a column from a two-dimensional array is assigned to each PE through a degenerate distribution.

## Global Address Computation

To find the location within the toroidal mesh of an element of an array, one must determine the number of the PE to which that element has been assigned and the address within the local memory of that PE. The PE number and the local address together, therefore, describe a particular location in global memory. In the preferred embodiment, a PE number and local offset are encoded in the linearized index of the element. The local offset is combined with the local base address to form the local address of the element. The index must therefore be separated into its component parts, viz, PE number and local offset, and combined with the local base address within the PE prior to application to the torus network.

The present invention describes a method which simplifies the calculation of the global address, and includes the extraction of PE number and local offset from a linearized array index and distribution specification. In addition, the present invention describes a mechanism for accomplishing this calculation in software or in hardware while providing a high degree of flexibility as to which bits of the index are designated PE number bits and which are local offset bits. In one embodiment, a software program extracts the PE number and local offset from a linearized index in a manner to be described In another embodiment, a centrifuge extracts PE number bits from the index under control of a software supplied mask and compresses out the "holes" left in the offset by their removal. In one series of embodiments, this masking and compression are done in hardware in a manner to be described.

## Shared Data Descriptors

As can be seen in FIGURES 3A-C, the 7th element of array A, A(7), could be distributed on any one of the PEs depending on the data distribution selected Therefore, in order to find element A(7), it is necessary to know not only that it is the 7th element within array A, but also the data distribution algorithm used to distribute the elements of A across the assigned PEs. In one embodiment, the data distribution algorithm is determined by examining the extent E[i] of each dimension of the array, the number of PEs P[i] allocated to that dimension and the block size B[i] chosen in the distribution specifier statement for each dimension. This information would require M bits of information for each dimension i, where:

$$M[i] = \log2(E[i]) + \log2(P[i]) + \log2(B[i])$$

Such an approach overspecifies the information needed For instance if dimension x has an extent E[x] = 32 and P[x] = 2 and B[x] = 4, a total of eight bits would be needed to specify the location of an element within the data object. Therefore, in another embodiment, the value E[i] is replaced with a value C[i], where C[i] is the number of cycles through the PEs. Now,

$$C[i] = E[i]/(P[i]*B[i])$$

and the number of bits M[i] needed to locate an element within a dimension is:

$$M'[i] = \log2(C[i]) + \log2(P[i]) + \log2(B[i])$$

$$= (\log2(E[i]) - (\log2(P[i]) + \log2(B[i])))$$

$$+ \log2(P[i]) + \log2(B[i])$$

$$= \log2(E[i])$$

or five bits in the above example. As can be seen, the number of bits required to represent the cycle, PE and block size is equal to the number of bits required to identify an element within array A Therefore, for each dimension, one can specify the location of an element within that dimension by specifying the three different fields: cycle, PE, and block. What is unique about this approach is that it embeds the information leading to a PE's identity within each dimension. It is then possible to extract PE identification information out of each dimension and combine the information to determine the system PE number.

In the preferred embodiment of MPP system 100, the extent of each array dimension is rounded up to a power of two. Therefore, each bit position in a linearized array index corresponds to a well defined bit position in the PE number and offset of the associated reference. Applying what was found above, each dimension of a shared array has three associated sections in its distribution specification: block-size (B), PE (P) and cycle (C). The P section occupies bit positions which contribute to the object's PE number while the B and C fields contribute to the object's address within the PE. In one embodiment, a PE's local memory is split into a number of segments, with some segments marked as private and others as shared memory. The offset in such an embodiment would be combined with the array local base address to form the local virtual address (LVA) within a shared segment.

In one embodiment, as in FIGURE 5 above, the distribution specification 602 can be represented as a distribution mask 620. In the preferred embodiment of this method, PE bits in the mask are designated by a "1" while cycle and block-size bits are "0"s. Such a mask is typically split into N dimensions as in FIGURE 6, with the number of bits reserved for each dimension equal to the base two log of the extent of that dimension. The three fields of each dimension are concatenated to form the address mask. For example, a representative mask for an N-dimensional array would be formed by concatenating C[7], P[7], B[7], ..., C[1], P[1], B[1]. Such a mask is shown in FIGURE 6. In a mask such as in FIGURE 6, $eB_j$ is defined as the end bit position for the block-size bits of dimension j and $eC_j$ is the end bit positions for the cycle bits of dimension j. The suffix indicates array dimension, with 1 indicating the fastest running dimension. In the MPP parallel Fortran embodiment, a maximum of seven dimensions is permitted. Shared scalars are treated as a special case of 1 dimensional arrays.

In one embodiment, distribution mask 620 bit positions are numbered from the least significant bit (LSB) 0 on the right to the most significant bit (MSB) on the left. The width w of a field within the mask is the number of bit positions it occupies, while the bit position one beyond the end of a field is called the "end bit position" of the section. For example: if B[1], P[1], C[1] occupy 4, 3, and 5 bits respectively, their end bit positions are 4, 7, and 12, respectively.

The block bits B[i] of a dimension i determine an element offset within a block. PE-number bits, tagged P, determine part of the PE address of an element, while cycle (C) bits determine the occurrence (cycle) of a block. As shown in FIGURE 6, $eB_j$ ($eC_j$) indicate the bit position one beyond the Block (Cycle) section for dimension j. $wP_j$ gives the bit width of the PE-number for dimension j. The eB and wP attributes provide enough information to reconstruct an array's centrifuge mask. By supplying the eC attributes, however, the PE and offset contributions of each dimension can be computed independently, thus supporting dimensional separation.

Data distribution of a multidimensional array A can be described within the following expression:

$$\text{DIMENSION A}(L_1{:}U_1,\ldots,L_d{:}U_d)$$

$$\text{CDIR\$} \qquad \text{SHARED A}(\alpha_1,\ldots,\alpha_d)$$

where

$\alpha_j$ = : if Degenerate($\alpha_j$)
$w_j$:BLOCK if Block($\alpha_j$)
$W_j$:BLOCK(B[j]) if BlockN($\alpha_j$)

As described above, each dimension of a dimensionally distributed array is Degenerate (:), Block (:BLOCK) or BlockN (:BLOCK(N)). Each Block or BlockN dimension is assigned a weight ($w_j$) and a block-size (B[j]), with a default of one.

The PEs allocated to each dimension do not sum to the total number of PEs, but rather they must be multiplied. For example, if a two dimensional array is to be distributed over 32 PEs, the available options are to assign one PE to the first dimension and 32 PEs to the second, i.e. 1x32, or 2x16, or 4x8, or 8x4, or 16x2, or 32x1. A degenerate distribution requires that exactly one PE be assigned to that dimension. In the two non-degenerate distributions, the user has the option of specifying the number of PEs to be assigned by using the weight field $w_j$ in the distribution. By interpreting $w_j$ as an exponent of two rather than the number of PEs directly, it also represents the width of the PE field $wP_j$.

In the preferred embodiment, the MPP system 100 compiler maintains the above information in a shared data descriptor (SDD) table associated with each data object. One such SDD is illustrated, for example, in FIGURE 7A In FIGURE 7A, SDD 500 includes a local base address 502, a linearized index, or offset 504, a canonical bit 506 and up to seven dimension information fields 508. In one embodiment local base address 502 is a 48 bit field which is used as a local address into a shared segment.

Offset 504 is the linearized index of this element of the shared array. Canonical bit 506 is a 1 bit field which is set to 0 if each dimension is distributed individually, to 1 otherwise. An array in which each dimension is distributed individually is said to be a "dimensionally distributed" array. Dimension information fields 508 describe the shared array in each of its dimensions. Dimension information fields 508 are broken down into three subfields as shown in FIGURE 7B.

In one embodiment the distribution algorithm treats the array as if it were a one-dimension array, regardless of the array's declared rank. In one such embodiment the mask is constant, with the block size set to 32 elements and the PE size set to the number of available PEs. Those skilled in the art will readily appreciate that the rank used by the distribution specification need not correspond to the declared rank of the array, and could be of any dimensionality. For instance, in a canonical distribution all dimensions of the array are collapsed into a single dimension distributed across the allocated number of processing elements. In another embodiment it may be advantageous for a canonical distribution to explode one or more dimensions into multiple dimensions in order to gain an advantageous distribution.

In FIGURE 7B, the cyc_ebp (cycle end bit position) field 510 is a 6-bit field used to determine the extent E[n] of a particular dimension n. The formula for calculating cyc_ebp field 510 for dimension n is:

$$\text{cyc_ebp}(n) = \log2(E[n]) + \text{cyc_ebp}(n-1) \qquad (1)$$

where cyc_ebp(0) = 0

The pe_bcnt (PE bit count) field 512 is a 4 bit field used to determine the number of processors P[n] across which dimension n is distributed. The formula for calculating pe_bcnt field 512 for dimension n is:

$$\text{pe_bcnt}(n) = \log2(P[n]) \qquad (2)$$

The blk_ebp (block end bit position) field 514 is a 6 bit field used to determine the distribution block size B[n] in dimension n. The formula for calculating blk_ebp field 514 for dimension n is:

$$\text{blk_ebp}(n) = \log2(B[n]) + \text{cyc_ebp}(n-1) \qquad (3)$$

In operation, the first field that should be set up is local base address 502. Field 502 should be set with the value returned from, for instance, a shared memory allocation such as a shmalloc() instruction. Offset 504 should be generally be set to zero. An SDD initialized in this manner represents both the whole array and its first element. In cases, however, where a routine is trying to set up the SDD so that it points to an array subsection, offset 504 can be used to point to the first element in that subsection. Canonical bit 506 is set to zero for arrays which are dimensionally distributed and is set to 1 for arrays which are not. The remaining fields are dimensional distribution fields 508. They are calculated as given by formulas (1), (2) and (3) above. It should be noted, however, that since the left dimension of a Fortran multidimensional array declaration is the fastest running dimension, its distributional information will be placed in dimensional information field 508.1, with the remaining dimensions placed in consecutively higher number dimension fields 508 to point n.

## Hardware Centrifuge

FIGURE 4B shows a functional block diagram of a global address calculation which uses a mask 620 to separate the PE number 606 from the local offset 608. The inputs to the centrifuge 622 are a linearized array element index 600 and a distribution mask 620. The index includes the PE number and offset bits combined according to a user defined pattern, with the mask 620 representing that pattern. The outputs from the centrifuge 622 are the separated PE number 606 and local offset 608.

Centrifuge 622 uses the mask 620 to determine which bits of the index are PE number bits and which bits of the index are index offset bits. In one embodiment the mask 620 is developed by examining the distribution specifiers used by the programmer; in such an embodiment, the mask 620 represents the data distribution chosen for that data object.

In one embodiment of an MPP system, the linearized index is a 36-bit value representing an offset into a global array, of which twelve bits are assigned to the PE number, and twenty four bits are assigned to the local offset from the local base address. The centrifuge portion of such an embodiment is illustrated generally in FIGURE 5. Those skilled in the art will appreciate that a different number of bits could be assigned as PE number or offset bits, or that the number of bits could be variable, or the sense of the mask bit values could be inverted, without departing from the scope of the present invention.

In the embodiment shown in FIGURE 5, a "1" in the mask indicates that the corresponding bit of the index is assigned to the PE number. For example, bit 2 of the mask is set to 1 in FIGURE 5. Thus the corresponding bit of the index is a bit assigned to the PE number. If a bit of the mask is set to 0, the corresponding bit of the index is assigned to the local offset. The hardware centrifuge pulls bits from the index where mask bits are set to "1" and compresses them into the 12-bit PE number output. Where the mask bits are set to "0", the hardware centrifuge pulls bits from the index and compresses them into the 24-bit offset. It should be understood that the bit values shown in FIGURE 5 are arbitrarily chosen for the sake of illustration. The user can select a number of different data distributions; the mask used will reflect the data distribution selected. This approach gives the programmer great flexibility; he or she can distribute system data throughout memory in almost any simple or complex pattern as will be described in more detail below.

The following equation shows how a centrifuge mask M may be constructed from the above SDD information.

$$M = \sum_{j=1}^{d} ((1 \ll wP_j) - 1) \ll eB_j$$

where « indicates shift left for the number of bits ($wP_j$ or $eB_j$) indicated. Because all summands have disjoint bit positions set, the summation could be replaced with a bitwise OR operation.

The centrifuge masks for array A in FIGURES 3A-C can now be calculated. In the distribution of FIGURE 3A, each PE receives E[1]/P[1] = 16/4 or 4 elements of A This distribution can be represented as follows:

number of elements = 32
cycle = 16/4 = 4
PE = 4; and
block = 1.

Once the number of bits needed to specify the cycle, PE and block size within a particular dimension has been determined, one can derive a mask which can be used to extract PE information from an index and leave behind information relative to the offset within that PE. In the preferred embodiment of the MPP system, 64 bits are used to address into physical memory of MPP 100. The upper 16 bits of that 64 bits contain the PE number, and the remaining 48 bits contain the offset into the PE. Therefore, we need a function that extracts the 16 bits of PE and the 48 bits of offset information from the index. Given the distribution of elements depicted in FIGURE 3A, it is possible to come up with an address mask in which the number of cycle bits equals log2(4) = 2, the PE number equals log2(2) = 2, and block size equals log2(1) = 0. Therefore, the PE number can be extracted simply by applying an address mask in which the lower two bits are set to one. Similarly, the offset within that PE can be calculated simply by masking off the lowest two bits and right-shifting the remaining address. The bit masks needed for FIGURES 3A-C are shown in Table 1 below.

Table 1

| FIGURE | mask | cycle | PE | block | distribution |
|---|---|---|---|---|---|
| 3A | 0011 | 2 | 2 | 0 | :BLOCK(1) |
| 3B | 0110 | 1 | 2 | 1 | :BLOCK(2) |
| 3C | 1100 | 0 | 2 | 2 | :BLOCK OR :BLOCK(4) |

By using the above masks, we can now determine that A(7) resides on PE2 with a local offset of 1 for FIGURE 3A, resides on PE3 with a local offset of 0 for FIGURE 3B and resides on PEI with a local offset of 2, for example, in FIGURE 3C. We have therefore developed an address mask which allows us to find an element within any array for any given data distribution.

An example for a two-dimensional array distributed among eight PEs follows. For 4 PEs assigned to dimension 1 and 2 PEs assigned to dimension 2, the data distribution specifications would be as follows:

```
REAL A(128, 64)
SHARED A( 2:BLOCK(4), 1:BLOCK(2))
```

where, in this embodiment, the numbers before the BLOCK statements indicate a base two log of the number of PEs assigned to that dimension, and number of bits in the fields of the centrifuge mask are assigned as follows:

```
cycle2  PE2  block2 cycle1  PE1  block1
+-----+-----+-----+-+-----+-----+------+
|  4  |  1  |  1  || 3  |  2  |  2   |
+-----+-----+-----+-+-----+-----+------+
```

where cyclel, PE1, and blockl are the three mask fields for dimension 1, the leftmost dimension, and cycle2, PE2, and block2 are the mask fields for dimension 2, the rightmost dimension. The address centrifuge mask would therefore be:

000010 0001100

where the three bits set in the mask indicate the location of PE bits in the corresponding index address. To generate a global address from a reference A(I,J) one would compute (I-1)+128*(J-1) to for a linearized indes. The linearized index would be centrifuged to form the PE number and local offset. These PE-bits and offset-bits can be used to create the virtual address by adding the offset-bits to the base of A, and using that value to reference a memory location on the PE identified by the PE-bits.

If the actual argument is not distributed, or all dimensions are distributed degenerately, then the address mask should be zero. A zero address mask means that the index expression does not need the PE bits separated from the offset bits.

This ability to arbitrarily define via a software supplied mask the bits in the index address which are to be interpreted as PE number or offset bits provides a simple method for the programmer to specify the most optimal arrangement of data in memory which will result in the most efficient processing of the data for each particular processing task. The fact that the present address centrifuge allows the user to achieve any organization of data through the simple mechanism of a software supplied mask results in an extremely flexible and easy to use mechanism to arrange data throughout memory.

The above centrifuge mask can be applied either within a software program or within special hardware set aside for address translation. If the implementation is in software, one separates the PE number from the offset by applying the mask through, for example, testing and shifting individual bits or by other means known to those skilled in the art. If in hardware, a number of approaches is possible. A block diagram of one such approach is shown in FIGURE 8. In FIGURE 8, the index and mask are processed in a serial fashion, and the index bits are stored as representing either PE number bits or as offset bits, depending on the value of the corresponding mask bit.

In FIGURE 8, the 36-bit mask and the 36-bit index are stored in two 36-bit right shift registers 350 and 352, respectively. The bits are shifted out of the registers, one bit at a time, and are input to two result right shift registers 358 and 360. The index and mask bits are simultaneously bit-wise shifted out of shift registers 350 and 352. The bits are shifted from the low order bits to the high order bits. These bits are input to a pair of result shift registers 358 and 360. Register 358 is used to accumulate the PE number bits and is a 12-bit right shift register. Register 360 is used to accumulate the offset bits and is a 24-bit right shift register.

The mask bits enable the shifting for the PE right shift register 358 and the offset right shift register 360. If the mask bit is set to 1, PE right shift 358 is enabled and the corresponding index bit is loaded into the most significant bit in that register. If the mask bit is a 0, offset right shift 360 is enabled and the corresponding index bit is loaded into the most significant bit of that register. Each time a bit is loaded to a result register 358 or 360, a right shift for that register 358 or 360 is enabled The bits in that register are shifted right one bit position each time a new bit is loaded into the register. The process continues in a serial fashion shifting and selecting bits until all 36 bits have been shifted out of registers 350 and 352 and into the appropriate result register 358 or 360.

Once all 36 bits of the index and mask are shifted out of registers 350 and 352, the resulting PE number and offset bits are located in their appropriate bit positions in result registers 358 and 360, respectively. The circuit of FIGURE 8 outputs a centrifuged address every 36 clock periods

FIGURE 9 shows a block diagram for an alternate hardware embodiment of the address centrifuge. To shorten the number of clock periods required for the centrifuge to generate an address, the embodiment of FIGURE 9 shows a hardware centrifuge implemented as a 5-bit parallel, semi-pipelined unit. The parallel nature and pipelined design of the embodiment shown in FIGURE 9 gives it a speed advantage over the embodiment shown in FIGURE 8.

As with the embodiment of FIGURE 8, the two inputs to the centrifuge in FIGURE 9 comprise the index and mask. Index register 301 contains the 24 address offset bits and the 12 PE number bits in an arbitrary interleave as designated by the mask which is stored in mask register 306. The outputs from the centrifuge are a 12-bit PE number and separate 24-bit address offset, stored in registers 330 and 332, respectively.

The centrifuge in the embodiment of FIGURE 9 is preferably implemented as a 5-bit-per-clock semi-pipelined unit. It generates a result every 8 clock periods. The centrifuge of FIGURE 9 operates on 5-bit slices of the index and the mask, starting from the low order bits to the high order bits. The centrifuge operates on each of the 5 bits of the current slice in parallel. In addition, the centrifuge is semi-pipelined, which further increases the speed with which a result is obtained.

Before being applied to the centrifuge, an index is generated by repeatedly adding a remote stride 303 (discussed in more detail below in connection with FIGURE 12) to the index 301. Adder 302 is preferably semi-pipelined, and adds 5 bits per clock period (from least significant to most significant bits) and in the preferred embodiment requires 8 clock periods to produce a result. The 5-bit slices of the result are fed into the centrifuge at input register 304.

The mask is static for the duration of the block transfer. A 3-bit slice counter 308 counts from 0 to 7 synchronously with the control that is selecting 5-bit slices of the index and selects matching 5-bit slices of the mask using a 5-bit multiplexor 310. Thus, when bits 0-4 of the index are input to the centrifuge from register 304, bits 0-4 of the mask are also input to the centrifuge from 5-bit multiplexor 310. The mask slice joins the index slice in each of two pipelines: the PE pipe, designated by phantom line 334 and the offset pipe designated by phantom line 336.

Following the slice through PE pipe 334, the mask bits are used to control the compression of all of the index bits where mask bits are set to 1, and eliminating all of the index bits where the mask bits were 0. The result is 0 to 5 bits of the PE number (depending on how many mask bits were set) left-justified in left shift register 312. The operation of left shift register will be described in more detail below in connection with FIGURES 10A-10E.

At the same time, the number of 1 bits set in the current 5-bit slice of the mask are counted by shift counter 314. Thus counter 314 counts how many bits of the current 5-bit slice of the index are PE bits. This value is used as a shift count input to right shift register 320. Shift register 320 shifts the accumulated PE number stored in PE register 330 (discussed below) by the number of PE bits in the current 5-bit slice of the index as determined by counter 314. The accumulated index in register 320 is then "merged" with the next 5-bit slice left justified in register 312 by PE merge function 326. PE merge function 326 is preferably implemented using a bit-wise OR of the bits in registers 312 and 320 to arrive at an accumulated PE number which is then stored in the 12-bit PE register 330. The accumulated PE number is then fed back and loaded into the most significant bit positions of right shift register 320. These bits are then shifted again to make room for the PE number bits from the next 5-bit slice of the index from register 312.

The offset pipeline 336 works in a manner similar to PE pipeline 334. However, the mask bits are complemented, that is, the mask bits that are 0s are counted in shift counter 318 and are the bits that control the gating of data in left shift register 316 and offset merge 328. In addition, right shift register 322. Also, offset register 332 is a 24 bit register instead of a 12-bit register. Otherwise, offset pipeline 336 works in the same manner as described above for PE pipeline 334.

In the preferred implementation, exactly 12 bits must set as the PE number and exactly 24 bits must be set as offset in the mask for the centrifuge to function correctly. The PE and offset fields are thus of a fixed bit length. However, it shall be understood that variable length PE and offset fields could be used without departing from the scope of the present invention.

FIGURES 10A-10E show detailed diagrams of the combinational logic used to implement PE left shift register 312. Each of the five bits, 0-4 are generated using the combinational logic functions shown in FIGURES 10A-10E, respectively.

FIGURE 10A shows the combinational logic used to generate bit 0 of left shift register 312. The boolean equation for the logic shown in FIGURE 10A is as follows:

BIT 0 = S4 M4

+ S3 M4' M3

+ S2 M4' M3' M2

+ S1 M4' M3' M2' M1

+ S0 M4' M3' M2' M1' M0

FIGURE 10B shows the combinational logic used to generate bit 1 of left shift register 312. The equation for the logic shown in FIGURE 10B is as follows:

BIT 1 = S3 M4 M3

+ S2 M4' M3 M2

+ S2 M4 M3' M2

+ S1 M4' M3' M2 M1

+ S1 M4' M3 M2' M1

+ S1 M4 M3' M2' M1

+ S0 M4' M3' M2' M1 M0

+ S0 M4' M3' M2 M1' M0

+ S0 M4' M3 M2' M1' M0

+ S0 M4 M3' M2' M1' M0

FIGURE 10C shows the combinational logic used to generate bit 2 of left shift register 312. The equation for the logic shown in FIGURE 10C is as follows:

BIT 2= S2 M4 M3 M2

+ S1 M4 M3 M2' M1

+ S1 M4 M3' M2 M1

+ S1 M4' M3 M2 M1

+ S0 M4 M3 M2' M1' M0

+ S0 M4 M3' M2 M1' M0

+ S0 M4 M3' M2' M1 M0

+ S0 M4' M3' M2 M1 M0

+ S0 M4' M3 M2' M1 M0

+ S0 M4' M3 M2 M1' M0

FIGURE 10D shows the combinational logic used to generate bit 3 of left shift register 312. The equation for the logic shown in FIGURE 10D is as follows:

BIT 3 = S1 M4 M3 M2 M1

+ S0 M4 M3 M2 M1' M0

+ S0 M4 M3 M2' M1 M0

+ S0 M4 M3' M2 M1 M0

+ S0 M4' M3 M2 M1 M0

FIGURE 10E shows the combinational logic used to generate bit 4 of left shift register 312. The equation for the logic shown in FIGURE 10E is as follows:

BIT 4 = S0 M4 M3 M2 M1 M0

Those of skill in the art will readily understand that offset left shift register 316 works in a manner similar to that of PE left shift register 312, except that the mask bits that are set to 0 are counted by 3-bit counter 318 and are the bits that control the gating of data into offset left shift register 316 and offset merge 328.

**Software Centrifuge**

A method which depends on testing and shifting bits in software can become overly time consuming. To avoid this, an alternate software embodiment is provided as described below.

The software centrifuge operation computes the home PE, *P*(*x*), and element offset, *E*(*x*), of an element of a distributed array A, where *x* denotes a vector of zero based index values, i.e., index values after the appropriate lower bounds have been subtracted. A formula for calculating the PE number and offset is as follows:

$$P(x) = \sum_{j=1}^{d} P_j(x) \ll \left(\sum_{i=1}^{j-1} \mathrm{wP}_i\right) \qquad (4)$$

where

$$P_j(x) = \begin{cases} 0, & \text{if Degenerate}(\alpha_j) \\ x_j \gg \mathrm{wB}_j, & \text{if Block}(\alpha_j) \\ (x_j \gg \mathrm{wB}_j)\&\mathrm{mP}_j, & \text{if BlockN}(\alpha_j) \end{cases}$$

and

$$E(x) = \sum_{j=1}^{d} E_j(x) \ll \left(\mathrm{eC}_{j-1} - \left(\sum_{i=1}^{j-1} \mathrm{wP}_i\right)\right) \qquad (5)$$

where

$$E_j(x) = \begin{cases} x_j, & \text{if Degenerate}(\alpha_j) \\ x_j\&\mathrm{mB}_j, & \text{if Block}(\alpha_j) \\ (x_j\&\mathrm{mB}_j)|((x_j \gg \mathrm{wP}_j)\&\sim\mathrm{mB}_j) & \text{if BlockN}(\alpha_j) \end{cases}$$

where

| | | |
|---|---|---|
| $eC_0$ | (for uniformity) | 0 |
| $wB_j$ | width of Block bits | $eB_j$ - $eC_{j-1}$ |
| $mP_j$ | PE-number mask | (1 « $wP_j$) - 1 |
| $mB_j$ | Block bits mask | (1 « $wB_j$) - 1 |

and where &, |, », «, and ~ are the bitwise logical operations AND, OR, right shift, left shift, and NOT, respectively.

Argument displacements aP, aE and aD are derived from the SDD and the associated extents as detailed in equations 6 through 9 below. These values are 0, 0 and 0 for non-arguments. Equation 6 shows how the dimension j component of the element offset is derived from the SDD offset. The notation V[i:j] indicates a vector section, in the tradition of Fortran 90 array syntax Below *f* denotes the number of declared dimensions of the formal parameter; *f* is 0 for a formal scalar. Equations 7 and 8 are the PE and LVA adjustments for those dimensions of the actual parameter beyond dimension *f*, while 9 is the displacement adjustment before for the declared dimensions of the formal parameter. These quantities are required for the final PE/LVA computation.

$$D_j = (\text{SDD.offset}\&((1 \ll eC_j) - 1)) \gg eC_{j-1} \qquad (6)$$

$$aP = P(D[f + 1 : 7]) \qquad (7)$$

$$aE = E(D[\mathrm{f} + 1 : 7]) \qquad (8)$$

$$aD = D[1 : f] \qquad (9)$$

The PE and LVA can now be calculated in terms of the centrifuge primitives P and E, and the displacement adjustments, aP, aE, and aD.

$$\mathrm{PE}(A(I)) = aP+P(I-L+aD) \qquad (10)$$

$$\mathrm{LVA}(A(I)) = \mathrm{Base}(A)+(aE+E(I-L+aD))*\mathrm{Size}(A(I)) \qquad (11)$$

In equations 10 and 11, L is the vector of least element indexes for each dimension.

**Recursive Centrifuge**

Yet another embodiment of the present address centrifuge will now be explained A recursive centrifuge system may be implemented to reduce the number of logic gates required in the previous brute force combinational implementation as illustrated in FIGURES 10A-10E. A general discussion of the recursive centrifuge concept is necessary to lay the foundation for the following disclosures of the hardware embodiment of the recursive centrifuge.

First, consider a modified centrifuge function which is passed a pair of partial results which have already been separately centrifuged. An example of the modified centrifuge function is shown in FIGURE 11. The function combines the two previously centrifuged partial results and returns the fully centrifuged result. The original pre-centrifuged address and associated mask are divided into two partial results which are independently centrifuged. This means that all PE bits (mask bits value 1) are in the left most bits of the partial result left hand argument (LHA), and all offset bits (mask bits value 0) are in the right most bits of the partial result right hand argument or (RHA).

The mapping from the partial results to the final result is also shown in FIGURE 11. Note that the PE bits of the LHA and the offset bits of the RHA do not shift position in the final mapping. In general, only the PE bits of the RHA and the offset bits of the LHA will shift position. This is because the RHA and LHA have already been separately centrifuged and therefore the PE bits of the LHA ($b_7$ in the example of FIGURE 11) and the offset bits of the RHA ($b_1$ and $b_0$ in the example of FIGURE 11) are already in the correct position before the modified centrifuge operation takes place. Further, the number of bit positions which the PE bits of the RHA (bits $b_3$ and $b_2$ in the example of FIGURE 11) must move to the left is equal to the total number of offset bits in the LHA which is simply the number of zeroes of the LHA of the mask (three in the example of FIGURE 11). Likewise, the number of bit positions which the offset bits of the LHA (bits $b_6$, $b_5$ and $b_4$ in the example of FIGURE 11) must move to the right is simply the total number of PE bits in the RHA or the number of ones of the RHA of the mask (two in the example of FIGURE 11).

In addition, because the associated RHA and LHA masks are organized (i.e., already centrifuged), it is not necessary to arithmetically count the number of zeroes in the LHA or ones in the RHA. Only the location of the 0 to 1 transition, i.e., the bit position at which a PE bit is adjacent to an offset bit, need be determined. As a result, no complex arithmetic circuitry such as counters or adders are required to implement the recursive centrifuge. Instead, a simple sum-of-products expression can be used to detect the PE/offset boundary in each partial result mask. These characteristics resuk in a centrifuge implementation having significantly lower gate counts and associated levels of logic, and a corresponding increase in the speed in which a centrifuged result is obtained.

This modified function centrifuge can be expanded using the concept of recursion in order to produce a fully centrifuged result from an arbitrary set of operands. The implementation is recursive in the sense that each stage operates on partial results which were centrifuged in the previous stage. FIGURE 12 shows a fully recursive centrifuge operation using the same example as shown in FIGURE 11. The full result is produced by generating 2-bit partial results at the first centrifuge stage, then 4-bit partial results at the second stage, then 8-bit partial results at the third stage (the final stage in the example of FIGURE 11) and so on until the last stage produces a single fully centrifuged address. The corresponding centrifuged mask is carried along at each stage and can be disposed of after the centrifuge operation is complete.

FIGURE 13 shows a block diagram of one embodiment of the recursive address centrifuge. The n-bit index address and n-bit mask are first input to a series of 2-bit centrifuges 402. Each 2-bit centrifuge 402 receives a group of two bits of the index address and the mask and outputs a two-bit centrifuged result as described above with respect to FIGURE 12. The outputs of two 2-bit centrifuge circuits 402 are input to a series of 4-bit centrifuge circuits 404, each of which output a centrifuged four bit result.

Additional layers of centrifuge 408 are present as needed to arrive at the required size n-bit centrifuge The final n-bit centrifuge stage 412 processes the results from two n/2-bit centrifuge stages 410 to produce the final n-bit fully centrifuged result 414.

Power-of-two bit subdivisions of the address were used for instructional purposes in this description of the recursive centrifuge, however, those skilled in the art will readily appreciate that the partial arguments need not be subdivided in power-of-two numbers of bits.

A hardware embodiment of the recursive centrifuge may be realized by implementing each stage of the recursive centrifuge using simple sum-of-products expressions of the mask and index addresses. To generate the sum-of-products expressions for the recursive centrifuge, the origin of each resulting bit in the post-centrifuged address is determined. A direct derivation of the associated boolean equations proceeds in the following manner.

For each right hand result (RHR) bit three factors are evaluated: (1) whether the corresponding pre-centrifuge bit (i.e., the RHA bit) is an offset or PE bit; (2) how many PE bits are to the right of the corresponding RHA bit; and (3) how many offset bits are in the LHA This is because an RHR bit can acquire its value from any of three places: (1) from the corresponding bit in the RHA; (2) from a PE bit in the RHA to the right of the position in question; or (3) from one of the offset bit positions in the LHA.

Similarly, the left hand result (LHR) assignments depend on (1) the corresponding LHA bit, (2) the number of offset bits to its left, and (3) the total number of PE bits in the RHA. These considerations can be expressed by the following pseudocode:

```
/* determine the right hand address result (RHR) */
   for (each bit "j" in the RHR) {
      if (the corresponding RHA bit [in position "j"] is an offset bit)
        {RHR bit "j" = RHA bit "j"}
      else if (total # LHA offset bits > # PE bits to the right of RHA bit "j")
        {RHR bit "j" = LHA bit to the right of "j" by total # of RHA offset
bits}
      else
        {RHR bit "j" = RHA bit to the right of "j" by total # of LHA offset
bits}
   }

/* determine the left hand address result (LHR) */
   for (each bit "j" in the LHR){
      if (the corresponding LHA bit [in position "j"] is a PE bit)
        {LHR bit "j" = LHA bit "j"}
      else if (total # RHA PE bits > # offset bits to the left of LHA bit "j")
        {LHR bit "j" = RHA bit to the left of "j" by total # of LHA PE bits}
      else
        {LHR bit "j" = LHA bit to the left of "j" by total # of RHA PE bits}
```

The associated mask results may be determined by evaluating all combinations of the LHA and RHA mask bits which would produce a PE mask result bit. The address result and mask result equations pseudocode representation can be implemented in boolean notation as a set of simple sum-of-products expressions where the PE and offset bit counts are effectively pre-computed due to the nature of the already centrifuged right hand and left hand arguments. The boolean equations shown in Table 2 produce an 8-bit address/mask result from a pair of 4-bit partial result address/mask arguments. Thus, the boolean equations shown in Table 2 are an implementation of the 8-bit centrifuge stage 406 shown in FIGURE 13. The LHA address is "$b_{4-7}$", the LHA mask is "$n_{4-7}$", the RHA address is "$b_{0-3}$", and the RHA mask is "$n_{0-3}$". The result address is "$c_{0-7}$" while the result mask is "$p_{0-7}$" (also refer to the example shown and described above with respect to FIGURE 11).

Table 2

| | centrifuged address result | comment | | centrifuged mask result |
|---|---|---|---|---|
| c0 | $=b0\ \overline{m0}$ | offset bit, no change | p0 | $=n4\ n0$ |
| | $+b0\ m0\ \overline{m4}$ | PE bit, new bit comes from RHA | | |
| | $+b4\ m0\ \overline{m4}$ | PE bit, new bit comes from LHA | | |
| c1 | $=b1\ \overline{m1}$ | offset, no change | p1 | $=n4\ n1$ |
| | $+b0\ m0\ m5\ \overline{m4}$ | PE, from RHA | | $+n5\ n0$ |
| | $+b1\ m1\ \overline{m4}$ | | | |
| | $+b4\ m1\ \overline{m0}\ \overline{m4}$ | PE, from LHA | | |
| | $+b5\ m0\ \overline{m5}$ | | | |
| c2 | $=b2\ m2$ | offset, no change | p2 | $=n4\ n2$ |
| | $+b0\ m0\ m6\ \overline{m5}$ | PE, from RHA | | $+n5\ n1$ |
| | $+b1\ m1\ m5\ \overline{m4}$ | | | $+n6\ n0$ |
| | $+b2\ m2\ \overline{m4}$ | | | |
| | $+b4\ m2\ \overline{m1}\ \overline{m4}$ | PE, from LHA | | |
| | $+b5\ m1\ \overline{m0}\ m5$ | | | |
| | $+b6\ m0\ \overline{m6}$ | | | |
| c3 | $=b3\ m3$ | offset, no change | p3 | $=n4\ n3$ |
| | $+b0\ m0\ m7\ \overline{m6}$ | PE, from RHA | | $+n5\ n2$ |
| | $+b1\ m1\ m6\ \overline{m5}$ | | | $+n6\ n1$ |
| | $+b2\ m2\ m7\ m6$ | | | $+n7\ n0$ |
| | $+b3\ m3\ \overline{m4}$ | | | |
| | $+b4\ m3\ \overline{m2}\ \overline{m4}$ | PE, from LHA | | |
| | $+b5\ m2\ \overline{m1}\ \overline{m5}$ | | | |
| | $+b6\ m1\ \overline{m0}\ m6$ | | | |
| | $+b7\ m0\ \overline{m7}$ | | | |
| c4 | $=b4\ \overline{m4}$ | PE, no change | p4 | $=n4$ |
| | $+b7\ \overline{m7}\ m1\ \overline{m0}$ | offset, from LHA | | $+n5\ n3$ |
| | $+b6\ \overline{m6}\ m2\ \overline{m1}$ | | | $+n6\ n2$ |
| | $+b5\ \overline{m5}\ \overline{m3}\ m2$ | | | $+n7\ n1$ |
| | $+b4\ \overline{m4}\ \overline{m3}$ | | | $+n0$ |
| | $+b3\ m5\ \overline{m4}\ m3$ | offset, from RHA | | |
| | $+b2\ m6\ \overline{m5}\ m2$ | | | |
| | $+b1\ \overline{m7}\ \overline{m6}\ m1$ | | | |
| | $+b0\ \overline{m7}\ m0$ | | | |

Table 2. (continued)

| centrifuged address result | comment | centrifuged mask result |
| --- | --- | --- |
| c5 $=b5\ \overline{m5}$ | PE, no change | $p5=n5$ |
| $+b7\ \overline{m7}\ m2\ \overline{m1}$ | offset, from LHA | $+n6\ n3$ |
| $+b6\ \overline{m6}\ \overline{m3}\ m2$ | | $+n7\ n2$ |
| $+b5\ \overline{m5}\ \overline{m3}$ | | $+n1$ |
| $+b3\ m6\ \overline{m5}\ m3$ | offset, from RHA | |
| $+b2\ \overline{m7}\ \overline{m6}\ m2$ | | |
| $+b1\ \overline{m7}\ m1$ | | |
| c6 $=b6\ \overline{m6}$ | PE, no change | $p6=n6$ |
| $+b7\ \overline{m7}\ \overline{m3}\ \overline{m2}$ | offset, from LHA | $+n7\ n3$ |
| $+b6\ m6\ \overline{m3}$ | | $+n2$ |
| $+b3\ \overline{m7}\ \overline{m6}\ m3$ | offset, from RHA | |
| $+b2\ \overline{m7}\ m2$ | | |
| c7 $=b7\ \overline{m7}$ | PE, no change | $p7=n7$ |
| $+b7\ \overline{m7}\ \overline{m3}$ | offset, from LHA | $+n3$ |
| $+b3\ \overline{m7}\ m3$ | offset, from RHA | |

Those skilled in the art will readily understand that the boolean equations for all of the centrifuge stages 402-412 shown in FIGURE 13 can be generated in a similar manner.

Not counting fan-out creation, the number of levels of logic required, is no more than 3 levels per centrifuge stage (assuming a 64-bit fan-in using 8-input NAND gates requires two levels). The initial stages will have low fan-in counts and could therefore be implemented in two levels. However, the later stages may require an additional level because of high fan-out requirements for the mask terms (generally each mask term may have to drive up to two loads per bit in that stage). Assuming 3 levels of logic per stage, a 64-bit recursive address centrifuge can thus be implemented in 18 logic levels. In a typical digital system design the propagation time through 18 levels of logic would require perhaps three clock periods whereas the 5 bit implementation of FIGURE 9 would produce the same result in thirteen clock periods.

Although the above embodiment of the recursive centrifuge can be used to centrifuge an address having any number of PE or offset bits, another embodiment of a recursive centrifuge for use in applications having a restricted range of PE and offset bits may be designed to further reduce gate count. This is accomplished by eliminating terms that would propagate a PE bit or offset bit out of a position from which it could not possibly have originated For example, assume the PE number is fixed at 16 bits. In going from a pair of 32-bit partial results to a 64-bit result, it will not be possible for RHA or LHA bits lower than position 16 (i.e., bits 0 through 15) to be PE bits. In this way, terms in the equations which require bits 0-15 to be PE bits can therefore be omitted.

Like the serial and 5-bit parallel centrifuge implementations discussed above, a recursive address centrifuge is easily pipelined Because each partial result will generally require no more than three logic levels, pipe staging can conveniently be inserted at the end of any partial result calculation.

Further, a recursive centrifuge may be used to form partial results which can then be further processed using other methods, such as the 5-bit parallel, semi-pipelined implementation described above with respect to FIGURE 9. While requiring a longer period of time to produce a result, such a "hybrid" centrifuge could be implemented with fewer gates, thus producing a more optimal implementation for a given set of circumstances.

Those skilled in the art will readily appreciate and understand that the varying implementations and combinations thereof described herein allow easy adaptation for optimal performance characteristics in any given situation or system environment.

A recursive centrifuge therefore provides several desirable features: (1) low latency implementation which produces a centrifuged result much faster than other non-brute force methods, (2) greater gate-count efficiency than brute force combinational implementations, (3) easy to pipeline to enable production of a new result each clock period, and (4) a conceptually simple processing algorithm that can be concisely expressed and systematically implemented.

## Block Transfers

An application of the address centrifuge will now be explained. Referring again to FIGURE 2, the present address centrifuge may be used in block transfer engine 208 to assist in performing transfers of blocks of data between local and remote memory. A block transfer engine (BLT) 208 is an asynchronous direct memory access controller which redistributes system data between local and remote memory blocks.

A BLT may use the address centrifuge to perform four types of data transfer operations: constant stride read, constant stride write, gather and scatter. A constant stride read operation transfers data from fixed increment address locations in remote memory to fixed increment addresses in local memory. A constant stride write operation transfers data from fixed increment address locations in local memory to fixed increment address locations in remote memory.

A gather operation transfers data from nonsequential memory locations in remote memory to fixed increment address locations in local memory. A scatter operation transfers data from fixed increment address locations in local memory to nonsequential memory locations in remote memory.

Use of the address centrifuge in a BLT is shown in FIGURE 14. The BLT shown in FIGURE 14 uses the address centrifuge embodiment described with respect to FIGURE 9. It shall be understood however, that any of the alternate preferred centrifuge implementations could also be used without departing from the spirit and scope of the present invention. Indeed, the substitution of alternate centrifuge implementations does not alter the functionality or the flexible advantageous addressing capabilities achievable, merely the speed with which a centrifuged address can be obtained.

To perform the four data transfer operations, the BLT must generate the desired remote index address to be read from or written to. This is the index as discussed above which is a memory address that contains a PE number and offset in a software defined bit format. The index is incremented during a constant stride read or write operation and held constant during a scatter or gather operation.

Before a constant stride read or write operation, the PE loads information into the BLT, the index register the remote stride register and the vector length register. Initially, the index register 301 is loaded with the first remote index that will be converted into a remote address. The remote stride register 303 is loaded with a value that the BLT repeatedly adds to the remote index to generate successive remote indexes. The vector length register 341 is loaded with a value equal to the total number of remote memory locations that the PE wishes to address. If set to 0, the BLT generates the maximum number of addresses, which is defined as 65,536 in the preferred embodiment.

During the constant stride operation, the BLT reads the first remote index from index register 301 and sends the index to the centrifuge. When reading the first index, the remote stride register is disabled and its value is zero. As the BLT sends the first index to the centrifuge. it decrements vector length register 341.

The BLT then adds the remote stride to the first index. This value is the next index value. As the BLT sends the next index value to the centrifuge, it decrements the vector length register.

The BLT then adds the remote stride to the next index to generate yet another index. As the BLT sends this index value to the centrifuge, it decrements the vector length register. The BLT continues this process until the value of the vector length register is zero, indicating that all desired addresses have been generated.

During a scatter or gather operation, the index value is routed through remote stride register 303 and the feedback to index register 301 is disabled. Before loading the BLT registers with information, the PE loads contiguous 64-bit local memory locations with indexes corresponding to the desired non-sequential remote memory locations which are to be addressed. Each of the local memory locations contains one index value.

Before starting the scatter or gather operation, the PE loads index vector register 340 with a 24-bit address offset that points to the first index stored in local memory. During the scatter or gather operation, the BLT reads the value of index vector register 340 and retrieves the index or group of indexes from the local memory. The BLT preferably retrieves indexes in groups of four. After reading the contents of the index vector register, the BLT automatically increments the value of the index vector register by the appropriate amount (by four in the preferred embodiment) to the point to the next index value or group of indexes to be addressed

Each index read from the local memory is added to index register 301. Because of this characteristic, the value of index register 301 can be zero or can be used as a base value for remote indexes. As the sum of the index and the value of index register 301 is sent to the centrifuge, the BLT decrements the value of vector length register 341 as described above for constant stride operations.

The BLT then retrieves the next set of indexes from local memory pointed to by the index vector register 340. After reading the contents of the index vector register, the value therein is incremented by to point to the next group of remote memory locations.

Each index in the next set of indexes is also added to the value stored in index register 301. As the sum of the index and the value of the remote index register is sent to the centrifuge, the value of the vector length register is decremented. The BLT continues to read the indexes from local memory until the value of the vector length register is zero.

After the centrifuge separates the index into the PE number and offset, the BLT converts the offset into an address offset. Adder 344 adds the offset to a base address stored in base register 346. The base register contains the starting word-oriented address of a remote data structure.

Before sending the address offset to the network interface, the BLT checks its value by comparing the address offset to the value in limit register 348. If the value of the address offset is greater than the value contained in the limit register 348 an offset range error occurs.

The BLT also does a PE range check on the PE number in register 330. For example, if a reference to PE number 9 occurs in a PE which is part of an 8 PE partition, a PE range error will occur.

The flexible addressing scheme, centrifuge and block transfer engine can be used to achieve a wide variety of data organizations in memory. An example using a 5-bit index will now be given, in which two of the five bits are assigned to the PE number and three of the five bits are assigned to the offset. For simplicity of illustration, the example will demonstrate the generation of indexes during a constant stride read or write operation In this operation, the remote stride is set to 1. Also, the first index is set to zero.

Table 3 shows three examples of how the bits of the index may be defined. As the index increments sequentially from 0 to 31 ($00000_2$ to $11111_2$), each of the three formats increment through PE numbers and index offsets differently.

In the first format (column I), the two most significant bits, bits $2^4$ and $2^3$, of the index are assigned as the PE number. Bits $2^0$-$2^2$ are assigned as the offset. As the index increments from 0 to 7, the offset increments from 0 to 7 in PE number 0. As the index increments from 8 to 17, the offset increments from 0 to 7 in PE number 1. In this format, the offset increments from 0 to 7 before the PE number increments.

In the second format (column II), the two least significant bits, bits $2^1$ and $2^0$, of the index are assigned as the PE number. As the index increments from 0 to 3, the PE number increments from 0 to 3 and the offset in bits $2^2$-$2^4$ is 0. As the index increments from 4 to 7, the PE number increments from 0 to 3 and the index offset is 1. In this format, the PE number increments from 0 to 3 before the offset increments.

In the third format (column III), bits $2^3$ and $2^1$ of the index are assigned as the PE number. As the index increments from 0 to 31, the PE number and offset increment in a set pattern. In this format, all of the PE number and offset combinations are incremented through, but are not incremented through sequentially.

**Table 3**

Index Format Examples

| | (I) | | (II) | | (III) | |
|---|---|---|---|---|---|---|
| | $2^4, 2^3$ = PE Number | | $2^1, 2^0$ = PE Number | | $2^3, 2^1$ = PE Number | |
| | $2^2, 2^1, 2^0$ = Offset | | $2^4, 2^3, 2^2$ = Offset | | $2^4, 2^2, 2^0$ = Offset | |
| Index Bits $2^4$ - $2^0$ | PE Number | Offset | PE Number | Offset | PE Number | Offset |
| 00000 | 0 | 0 | 0 | 0 | 0 | 0 |
| 00001 | 0 | 1 | 1 | 0 | 0 | 1 |
| 00010 | 0 | 2 | 2 | 0 | 1 | 0 |
| 00011 | 0 | 3 | 3 | 0 | 1 | 1 |
| 00100 | 0 | 4 | 0 | 1 | 0 | 2 |
| 00101 | 0 | 5 | 1 | 1 | 0 | 3 |
| 00110 | 0 | 6 | 2 | 1 | 1 | 2 |
| 00111 | 0 | 7 | 3 | 1 | 1 | 3 |
| 01000 | 1 | 0 | 0 | 2 | 2 | 0 |
| 01001 | 1 | 1 | 1 | 2 | 2 | 1 |
| 01010 | 1 | 2 | 2 | 2 | 3 | 0 |
| 01011 | 1 | 3 | 3 | 2 | 3 | 1 |
| 01100 | 1 | 4 | 0 | 3 | 2 | 2 |

**Table 3, (continued)**

| Index Bits $2^4$ - 20 | PE Number | Offset | PE Number | Offset | PE Number | Offset |
|---|---|---|---|---|---|---|
| 01101 | 1 | 5 | 1 | 3 | 2 | 3 |
| 01110 | 1 | 6 | 2 | 3 | 3 | 2 |
| 01111 | 1 | 7 | 3 | 3 | 3 | 3 |
| 10000 | 2 | 0 | 0 | 4 | 0 | 4 |
| 10001 | 2 | 1 | 1 | 4 | 0 | 5 |
| 10010 | 2 | 2 | 2 | 4 | 1 | 4 |
| 10011 | 2 | 3 | 3 | 4 | 1 | 5 |
| 10100 | 2 | 4 | 0 | 5 | 0 | 6 |
| 10101 | 2 | 5 | 1 | 5 | 0 | 7 |
| 10110 | 2 | 6 | 2 | 5 | 1 | 6 |
| 10111 | 2 | 7 | 3 | 5 | 1 | 7 |
| 11000 | 3 | 0 | 0 | 6 | 2 | 4 |
| 11001 | 3 | 1 | 1 | 6 | 2 | 5 |
| 11010 | 3 | 2 | 2 | 6 | 3 | 4 |
| 11011 | 3 | 3 | 3 | 6 | 3 | 5 |
| 11100 | 3 | 4 | 0 | 7 | 2 | 6 |
| 11101 | 3 | 5 | 1 | 7 | 2 | 7 |
| 11110 | 3 | 6 | 2 | 7 | 3 | 6 |
| 11111 | 3 | 7 | 3 | 7 | 3 | 7 |

The examples shown in Table 3 illustrate how the flexible addressing scheme, software mask and address centrifuge can be used to achieve a wide variety of data arrangements or organizations throughout memory. Although Table 3 and the examples therein are for constant strides it shall be understood by those of skill in the art that scatter or gather operations can also be performed using the same techniques.

It shall also be understood by those of skill in the art that there are many ways in which the present bit extraction techniques may be used in a system. For example, in addition to its use in a block transfer engine such as that described above, an address centrifuge can be used to operate directly on processor generated addresses. The flexible addressing scheme which the address centrifuge supports can be used in many different ways in a distributed memory multiprocessing system. Furthermore, such techniques could be used advantageously to extract predefined bits from data in signal processing or encryption applications.

## Claims

1. In a computing system having a plurality of processing elements, including a first processing element, wherein each processing element includes a processor and a local memory and wherein each local memory includes a plurality of memory locations, a method of addressing a first array element within an array having a plurality of array elements distributed according to a distribution specification across one or more of the plurality of processing elements, the method comprising the steps of

assigning a processing element number to each processing element;
assigning a local memory address to each memory location;
assigning a linearized index to each array element, wherein each linearized index comprises a plurality of bits and wherein the step of assigning a linearized index includes the step of assigning a first linearized index to the first array element;
computing, as a function of the first linearized index and the distribution specification, the processing element number of the processing element where the first array element is stored; and
computing, as a function of the first linearized index and the distribution specification, the local memory address of the memory location in which the first array element is stored.

**2.** The method according to claim 1 wherein the step of computing the local memory address comprises the steps of

providing a local base address into the array;
computing, as a function of the first linearized index and the distribution specification, a local offset; and
adding the local base address to the local offset to form the local memory address of the memory location in which the first array element is stored.

**3.** The method according to claim 1 wherein the step of computing the processing element number comprises the steps of

constructing a mask comprising a plurality of mask bit fields, wherein the step of constructing comprises the steps of

inserting a one in each mask bit field used to determine the processing element number; and
inserting a zero in all other mask bit fields;

applying the mask to the first linearized index, wherein the step of applying comprises the step of separating bits in the first linearized index such that index bits at locations designated by ones in the mask bit fields are placed within a first group of bits and index bits at locations designated by zeros in the mask bit fields are placed within a second group of bits; and
arranging the first group of bits to form the processing element number.

**4.** The method according to claim 3 wherein the step of computing the local memory address comprises the steps of:

arranging the second group of bits to form a local offset; and
adding a local base address to the local offset to obtain the local memory address of the memory location in which the first array element is stored.

**5.** In a computing system having a plurality of processing elements, including a first processing element, wherein each processing element includes a processor and a local memory and wherein each local memory includes a plurality of memory locations, a method of addressing a first array element within a multidimensional array having a plurality of array elements, wherein the plurality of array elements are distributed according to a distribution specification across one or more of the plurality of processing elements and wherein the first array element is stored on the first processing element, the method comprising the steps of

assigning a processing element number to each processing element;
assigning a local memory address for each memory location;
determining the processing element number and the local memory address associated with the memory location in which the first array element is stored, wherein the step of determining comprises the steps of:

separating a linearized index associated with the first array element into a plurality of dimension fields, wherein each dimension field is associated with a particular array dimension;
separating each dimension field into a processing element field and a block field;
concatenating the processing element fields from each of the dimension fields in a predetermined order to form the processing element number;

concatenating the block fields from each of the dimension fields in a predetermined order to form a local offset; and
adding a local base address to the local offset to form the local memory address of the memory location in which the first array element is stored.

**6.** The method according to claim 5 wherein the step of separating each dimension field comprises the steps of

applying a first mask to the linearized index to form a first result comprising bits associated with the processing element fields; and
applying a second mask to the linearized index to form a second result comprising bits associated with the block fields.

**7.** The method according to claim 5 wherein the step of separating each dimension field comprises the steps of

separating each dimension field into a cycle field, a processing element field and a block size field; and
concatenating the cycle and block size fields from each of the dimension fields to form the block field for that dimension field

**8.** The method according to claim 7 wherein the step of separating each dimension field into a cycle field, a processing element field and a block size field comprises the steps of:

applying a first mask to the linearized index to form a first result comprising bits associated with the processing element fields; and
applying a second mask to the linearized index to form a second result comprising bits associated with the cycle and block size fields.

**9.** The method according to claim 7 wherein the step of separating each dimension field into a cycle field, a processing element field and a block size field comprises the steps of

forming a first dimension field mask for each array dimension for isolating processing element number bits in each array dimension;
forming a second dimension field mask for each array dimension for isolating local offset bits in each array dimension;
for each dimension, applying the first dimension field mask and second dimension field mask to the linearized index to form a processing element identifier and a local offset identifier, respectively, for that dimension, wherein the local offset identifier comprises the cycle field and block size field for that dimension.

**10.** A computing system, comprising: .

a plurality of processing elements, including a first processing element, wherein each processing element comprises:

a processor; and
a local memory, wherein each local memory includes a plurality of memory locations; and

an interconnection network connecting the plurality of processing elements;

wherein the processing elements further comprise transferring means for transferring data stored in the local memory of a processing element to the local memory of another processing element, wherein the transferring means comprise an address centrifuge, the address centrifuge comprising:

means for computing, as a function of a mask word and a linearized index associated with a first array element, a processing element number, and
means for computing, as a function of the mask word and linearized index, the local memory address of the memory location in which the first array element is stored.

**11.** The computing system according to claim 10 wherein the transferring means further comprise a block transfer engine for transferring blocks of array elements between processing elements.

**12.** The computing system according to claim 10 or 11 wherein the address centrifuge comprises:

lineatized index receiving means for receiving a linearized index;
distribution specification receiving means for receiving a distribution specification specifying an array distribution;
centrifuging means, connected to the linearized index receiving means and the distribution specification receiving means, for extracting a processing element number and a local memory address from the linearized index as a function of the distribution specification.

**13.** The computing system according to claim 12 wherein the linearized index comprises processing element number bits and local offset bits and wherein the centrifuging means comprise:

mask generating means for generating a mask from the distribution specification;
processing element number extracting means, connected to the mask generating means, for extracting the processing element number from the linearized index, wherein the processing element number extracting means comprise:

means for masking the linearized index to isolate the processing element number bits; and
means for shifting the processing element number bits to form the processing element number; and

local offset extracting means, connected to the mask generating means, for extracting a local offset from the linearized index, wherein the local offset extracting means comprise:

means for masking the linearized index to isolate the local offset bits; and
means for shifting the local offset bits to form the local offset.

**14.** The computing system according to claim 12 wherein the centrifuging means comprise:

a centrifuge for extracting a processing element number and a local offset from the linearized index as a function of the distribution specification;
means for receiving a local base address; and
means for combining the local base address with the local offset to form the local memory address.

**15.** The computing system according to claim 12 wherein the distribution specification comprises a dimension distribution indicator for each of a plurality of array dimensions and wherein the centrifuging means comprise means for extracting a processing element number and a local memory address from the linearized index as a function of the dimension distribution indicators.

**16.** The computing system according to claim 15 wherein the linearized index comprises processing element number bits and local offset bits and wherein the centrifuge comprises:

mask generating means for generating a mask from the distribution indicators;
processing element number extracting means, connected to the mask generating means, for extracting the processing element number from the linearized index, wherein the processing element number extracting means comprise:

means for masking the linearized index to isolate the processing element number bits; and
means for shifting the processing element number bits to form the processing element number; and

local offset extracting means, connected to the mask generating means, for extracting a local offset from the linearized address, wherein the local offset extracting means comprise:

means for masking the linearized index to isolate the local offset bits; and
means for shifting the local offset bits to form the local offset.

**17.** The computing system according to claim 15 wherein the linearized index comprises processing element number bits and local offset bits and wherein the centrifuge comprises:

mask generating means for generating a dimension field mask from each of the dimension distribution indicators;
processing element number extracting means, connected to the mask generating means, for extracting the processing element number from the linearized index, wherein the processing element number extracting means comprise:

means for masking the linearized index with each of the dimension field masks to isolate the processing element number bits for each array dimension; and
means for combining the processing element number bits isolated for each array dimension to form the processing element number; and local offset extracting means, connected to the mask generating means,

for extracting a local offset from the linearized address, wherein the local offset extracting means comprise:

means for masking the linearized index with each of the dimension field masks to isolate the local offset bits for each array dimension; and
means for combining the local offset bits isolated for each array dimension to form the local onset.

**18.** In a computing system having a plurality of processing elements, wherein each processing element includes a local memory having a plurality of local memory locations, including a first local memory location, a method of addressing a first array element of a plurality of array elements, wherein the first array element is stored in the first memory location of a particular processing element, wherein each array element is associated with a linearized index, and wherein each linearized index comprises P processing element number bits and L local memory offset bits, the method comprising the steps of

generating a mask word, wherein the mask word has P + L mask word bits; and
centrifuging the mask word and linearized index to obtain a processing element number associated with the particular processing element and a local memory address associated with the first memory location.

**19.** The method of claim 18, wherein each mask word bit associates a processing element number bit with a first Boolean state value and a local memory offset bit with a second Boolean state value, and wherein the step of centrifuging comprises the steps of

mapping each linearized index bit to an associated mask word bit;
transposing positions of the first Boolean state values and the second Boolean state values in the mask word bits until the first Boolean state values occupy the most significant bit positions in the mask word; and
transposing the linearized index bits in accordance with the mask word bits;

whereby the transposed bits of the linearized index form a concatenated word of P processing element number bits and L local memory offset bits.

**20.** The method according to claim 18 wherein the step of centrifuging comprises the steps of.

a) mapping each bit of the linearized index to an associated mask bit;
b) storing the mask word in a mask register,
c) storing the linearized index in a linearized index register;
d) repetitively dividing the mask bits into a plurality of subwords. until each subword of the plurality of subwords is less than three bits long;
e) centrifuging each subword of the plurality of subwords and translating the associated bits of the linearized index;
f) grouping subwords of the plurality of subwords into groups of subwords;
g) centrifuging groups of subwords. and translating the associated bits of the linearized index; and
h) repeating steps f) and g) until the mask word is completely centrifuged;

whereby the transposed bits of the linearized index form a concatenated word of P processing element number bits and L local memory offset bits.

**21.** The method according to claim 18 wherein each mask word bit associates a processing element number bit with a first Boolean state value and a local memory offset bit with a second Boolean state value, wherein the step of generating a mask word comprises constructing the mask word from a distribution specification and wherein the step of centrifuging comprises the steps of:

a) mapping each bit of the linearized index to an associated mask bit;
b) storing the mask word in a mask register,
c) separating the linearized index into N separate bits;
d) searching for a transition between processing element bits and offset bits in pairs of adjacent bits of the N-bit mask;
e) if a transition is detected between a pair of adjacent bits, transposing the pair of adjacent bits to form a mask result for each pair and transposing bits in equivalent bit positions in the linearized index to form an index result for each pair,
f) searching for a transition between processing element bits and offset bits in adjacent pairs of mask results;
g) if a transition is detected in an adjacent pair of mask results, transposing the adjacent pair of mask results to form a mask result and transposing bits in equivalent bit positions of adjacent index result pairs to form an index result for each index result pairs; and
h) repeating steps f) and g) until an N-bit index result is formed.

**22.** An address centrifuge for a computing system having a plurality of processing elements, comprising:

means for receiving a mask word associated with an array;
means for receiving a linearized index associated with an element of the array;
means for computing, as a function of the mask word and linearized index, a processing element number, wherein the processing element number is the number of the processing element at which the element is stored; and
means for computing, as a function of the mask word and linearized index, the memory address at which the element is stored within that processing element.

**23.** An address centrifuge according to claim 22, further comprising:

recursive means for recursively centrifuging the mask word and linearized index to compute the processing element number and the memory address, the recurisve means being arranged a) to divide the mask word into a plurality of sub-words, b) to centrifuge the sub-words to give centrifuged sub-words and to transpose the linearized index in correspondence with the centrifuged sub-words, c) to group the centrifuged sub-words into groups of sub-words, d) to centrifuge the groups of subwords to give centrifuged groups of sub-words and to transpose the linearized index in correspondence with the centrifuged groups of sub-words, and e) to repeat c) and d) until the mask word is completely centrifuged so that the transposed linearized index comprises the processing element number concatenated with the memory address.

**24.** An address centrifuge according to claim 23, further comprising means for detecting the position of a transition between a pair of adjacent bits in a group of centrifuged sub-words.

**25.** A processing element for a computing system having a plurality of processing elements, comprising:

a processor;
memory including a plurality of memory locations;
transferring means for transferring data with another processing element in the computer system,

wherein the transferring means comprises an address centrifuge according to any one of claims 22 to 24.

**26.** A processing element according to claim 25, further comprising means for receiving a distribution specification specifying the distribution of an array and means for inferring a mask word, associated with the array, from the distribution specification.

**27.** A processing element according to claim 25, further comprising means for adding the address computed by the address centrifuge to a base address in order to obtain the memory address at which the element is stored within the processing element at which the element is stored.

**Revendications**

1. Dans un système informatique ayant une pluralité d'éléments de traitement, comprenant un premier élément de traitement, dans lequel chaque élément de traitement comprend un processeur et une mémoire locale et dans lequel chaque mémoire locale comprend une pluralité de positions de mémoire, un procédé d'adressage d'un premier élément de tableau à l'intérieur d'un tableau ayant une pluralité d'éléments de tableau distribués conformément à une spécification de distribution entre un ou plusieurs de la pluralité d'éléments de traitement, le procédé comprenant les étapes qui consistent :

   à affecter un numéro d'élément de traitement à chaque élément de traitement ;
   à affecter une adresse de mémoire locale à chaque position de mémoire ;
   à affecter un index linéarisé à chaque élément de tableau, chaque index linéarisé comportant une pluralité de bits et dans lequel l'étape d'affectation d'un index linéarisé comprend l'étape d'affectation d'un premier index linéarisé au premier élément de tableau ;
   à calculer, en fonction du premier index linéarisé et de la spécification de distribution, le numéro d'élément de traitement où le premier élément de tableau est stocké ; et
   à calculer, en fonction du premier index linéarisé et de la spécification de traitement, l'adresse de mémoire locale de la position de mémoire dans laquelle le premier élément de tableau est stocké.

2. Procédé selon la revendication 1, dans lequel l'étape de calcul de l'adresse de mémoire locale comprend les étapes qui consistent :

   à introduire une adresse de base locale dans le tableau ;
   à calculer, en fonction du premier index linéarisé et de la spécification de distribution, un décalage local ; et
   à additionner l'adresse de base locale au décalage local pour former l'adresse de mémoire locale de la position de mémoire dans laquelle le premier élément de tableau est stocké.

3. Procédé selon la revendication 1, dans lequel l'étape de calcul du numéro d'élément de traitement comprend les étapes qui consistent :

   à construire un masque comportant une pluralité de zones de bits de masque, l'étape de construction comprenant les étapes qui consistent :

      à insérer un un dans chaque zone de bits de masque utilisée pour déterminer le numéro d'élément de traitement ; et
      à insérer un zéro dans toutes les autres zones de bits de masque ;

   à appliquer le masque au premier index linéarisé, l'étape d'application comprenant l'étape qui consiste à séparer des bits dans le premier index linéarisé de façon que des bits d'index en des positions désignées par des uns dans les zones de bits de masque soient placés dans un premier groupe de bits et que des bits d'index en des positions désignées par des zéros dans les zones de bits de masque soient placés dans un second groupe de bits ; et
   à arranger le premier groupe de bits pour former le numéro d'élément de traitement.

4. Procédé selon la revendication 3, dans lequel l'étape de calcul de l'adresse de mémoire locale comprend les étapes qui consistent :

   à arranger le second groupe de bits pour former un décalage local ; et
   à additionner une adresse de base locale au décalage local afin d'obtenir l'adresse de mémoire locale de la position de mémoire dans laquelle le premier élément de tableau est stocké.

5. Dans un système informatique ayant une pluralité d'éléments de traitement, comprenant un premier élément de traitement, dans lequel chaque élément de traitement comprend un processeur et une mémoire locale et dans lequel chaque mémoire locale comprend une pluralité de positions de mémoire, un procédé d'adressage d'un premier élément de tableau dans un tableau multidimensionnel ayant une pluralité d'éléments de tableau, dans lequel la pluralité d'éléments de tableau sont distribués conformément à une spécification de distribution sur un ou plus d'un de la pluralité d'éléments de traitement et dans lequel le premier élément de tableau est stocké sur le premier élément de traitement, le procédé comprenant les étapes qui consistent :

à affecter un numéro d'élément de traitement à chaque élément de traitement ;
à affecter une adresse de mémoire locale pour chaque position de mémoire ;
à déterminer le numéro d'élément de traitement et l'adresse de mémoire locale associée à la position de mémoire dans laquelle le premier élément de tableau est stocké, l'étape de détermination comprenant les étapes qui consistent :

à séparer un index linéarisé associé au premier élément de tableau en une pluralité de zones de dimensions, chaque zone de dimension étant associée à une dimension particulière du tableau ;
à séparer chaque zone de dimension en une zone d'élément de traitement et une zone de bloc ;
à enchaîner les zones d'éléments de traitement à partir de chacune des zones de dimensions dans un ordre prédéterminé pour former le numéro d'élément de traitement ;
à enchaîner les zones de blocs à partir de chacune des zones de dimensions dans un ordre prédéterminé pour former un décalage local ; et
à additionner une adresse de base locale au décalage local pour former l'adresse de mémoire locale de la position de mémoire dans laquelle le premier élément de tableau est stocké.

**6.** Procédé selon la revendication 5, dans lequel l'étape de séparation de chaque zone de dimension comprend les étapes qui consistent :

à appliquer un premier masque à l'index linéarisé pour former un premier résultat comportant des bits associés aux zones d'éléments de traitement ; et
à appliquer un second masque à l'index linéarisé pour former un second résultat comportant des bits associés aux zones de blocs.

**7.** Procédé selon la revendication 5, dans lequel l'étape de séparation de chaque zone de dimension comprend les étapes qui consistent :

à séparer chaque zone de dimension entre une zone de cycle, une zone d'élément de traitement et une zone de taille de bloc ; et
à enchaîner les zones de cycle et de taille de bloc à partir de chacune des zones de dimensions pour former la zone de bloc pour cette zone de dimension.

**8.** Procédé selon la revendication 7, dans lequel l'étape de séparation de chaque zone de dimension en une zone de cycle, une zone d'élément de traitement et une zone de taille de bloc comprend les étapes qui consistent :

à appliquer un premier masque à l'index linéarisé pour former un premier résultat comportant des bits associés aux zones d'éléments de traitement ; et
à appliquer un second masque à l'index linéarisé pour former un second résultat comportant des bits associés aux zones de cycle et de taille de bloc.

**9.** Procédé selon la revendication 7, dans lequel l'étape de séparation de chaque zone de dimension en une zone de cycle, une zone d'élément de traitement et une zone de taille de bloc comprend les étapes qui consistent :

à former un premier masque de zone de dimension pour chaque dimension du tableau pour isoler des bits de numéro d'élément de traitement dans chaque dimension du tableau ;
à former un second masque de zone de dimension pour chaque dimension du tableau pour isoler des bits de décalage local dans chaque dimension du tableau ;
pour chaque dimension, à appliquer le premier masque de zone de dimension et le second masque de zone de dimension à l'index linéarisé pour former un identificateur d'élément de traitement et un identificateur de décalage local, respectivement, pour cette dimension, l'identificateur de décalage local comportant la zone de cycle et la zone de taille de bloc pour cette dimension.

**10.** Système informatique, comportant :

une pluralité d'éléments de traitement, comprenant un premier élément de traitement, dans lequel chaque élément de traitement comporte :

un processeur ; et

une mémoire locale, chaque mémoire locale comprenant une pluralité de positions de mémoire ; et
un réseau d'interconnexion connectant la pluralité d'éléments de traitement ;

dans lequel les éléments de traitement comportent en outre des moyens de transfert destinés à transférer des données stockées dans la mémoire locale d'un élément de traitement vers la mémoire locale d'un autre élément de traitement, les moyens de transfert comprenant une centrifugeuse d'adresse, la centrifugeuse d'adresse comportant :

un moyen destiné à calculer, en fonction d'un mot de masque et d'un index linéarisé associé à un premier élément de tableau, un numéro d'élément de traitement ; et
un moyen destiné à calculer, en fonction du mot de masque et de l'index linéarisé, l'adresse de mémoire locale de la position de mémoire dans laquelle le premier élément de tableau est stocké.

**11.** Système informatique selon la revendication 10, dans lequel les moyens de transfert comportent en outre un moteur de transfert de blocs destiné à transférer des blocs d'éléments de tableau entre des éléments de traitement.

**12.** Système informatique selon la revendication 10 ou 11, dans lequel la centrifugeuse d'adresse comporte :

un moyen de réception d'index linéarisé destiné à recevoir un index linéarisé ;
un moyen de réception de spécification de distribution destiné à recevoir une spécification de distribution spécifiant une distribution de tableau ;
un moyen de centrifugation, connecté au moyen de réception d'index linéarisé et au moyen de réception de spécification de distribution, pour extraire un numéro d'élément de traitement et une adresse de mémoire locale à partir de l'index linéarisé en fonction de la spécification de distribution.

**13.** Système informatique selon la revendication 12, dans lequel l'index linéarisé comporte des bits de numéro d'élément de traitement et des bits de décalage local et dans lequel les moyens de centrifugation comportent :

des moyens de génération de masque destinés à générer un masque à partir de la spécification de distribution ;
des moyens d'extraction de numéro d'élément de traitement, connectés aux moyens de génération de masque, pour extraire le numéro d'élément de traitement à partir de l'index linéarisé, les moyens d'extraction de numéro d'élément de traitement comportant :

des moyens destinés à masquer l'index linéarisé pour isoler les bits de numéro d'élément de traitement ; et
des moyens destinés à décaler les bits de numéro d'élément de traitement pour former le numéro d'élément de traitement ; et

des moyens d'extraction de décalage local, connectés aux moyens de génération de masque, pour extraire un décalage local à partir de l'index linéarisé, les moyens d'extraction de décalage local comportant :

des moyens destinés à masquer l'index linéarisé pour isoler les bits de décalage local ; et
des moyens destinés à déplacer les bits de décalage local pour former le décalage local.

**14.** Système informatique selon la revendication 12, dans lequel les moyens de centrifugation comportent :

une centrifugeuse destinée à extraire un numéro d'élément de traitement et un décalage local à partir de l'index linéarisé en fonction de la spécification de distribution ;
des moyens destinés à recevoir une adresse de base locale ; et
des moyens destinés à combiner l'adresse de base locale avec le décalage local pour former l'adresse de mémoire locale.

**15.** Système informatique selon la revendication 12, dans lequel la spécification de distribution comprend un indicateur de distribution de dimension pour chacune d'une pluralité de dimensions du tableau et dans lequel les moyens de centrifugation comprennent des moyens destinés à extraire un numéro d'élément de traitement et une adresse de mémoire locale à partir de l'index linéarisé en fonction des indicateurs de distribution de dimension.

**16.** Système informatique selon la revendication 15, dans lequel l'index linéarisé comporte des bits de numéro d'élément de traitement et des bits de décalage local et dans lequel la centrifugeuse comporte :

des moyens de génération de masque destinés à générer un masque à partir des indicateurs de distribution ;
des moyens d'extraction de numéro d'élément de traitement, connectés aux moyens de génération de masque, pour extraire le numéro d'élément de traitement à partir de l'index linéarisé, les moyens d'extraction de numéro d'élément de traitement comportant :

des moyens destinés à masquer l'index linéarisé pour isoler les bits de numéro d'élément de traitement ; et
des moyens destinés à déplacer les bits de numéro d'élément de traitement pour former le numéro de l'élément de traitement ; et

des moyens d'extraction de décalage local, connectés aux moyens de génération de masque, pour extraire un décalage local à partir de l'adresse linéarisée, les moyens d'extraction de décalage local comportant :

des moyens destinés à masquer l'index linéarisé pour isoler les bits de décalage local ; et
des moyens destinés à déplacer les bits de décalage local pour former le décalage local.

**17.** Système informatique selon la revendication 15, dans lequel l'index linéarisé comporte des bits de numéro d'élément de traitement et des bits de décalage local et dans lequel la centrifugeuse comporte :

des moyens de génération de masque destinés à générer un masque de zone de dimension à partir de chacun des indicateurs de distribution de dimension ;
des moyens d'extraction de numéro d'élément de traitement, connectés aux moyens de génération de masque, pour extraire le numéro d'élément de traitement à partir de l'index linéarisé, les moyens d'extraction de numéro d'élément de traitement comportant :

des moyens destinés à masquer l'index linéarisé avec chacun des masques de zones de dimensions pour isoler les bits de numéro d'élément de traitement pour chaque dimension de tableau ; et
des moyens destinés à combiner les bits de numéro d'élément de traitement isolés pour chaque dimension de tableau pour former le numéro d'élément de traitement ; et

des moyens d'extraction de décalage local, connectés aux moyens de génération de masque, pour extraire un décalage local à partir de l'adresse linéarisée, les moyens d'extraction de décalage local comportant :

des moyens destinés à masquer l'index linéarisé avec chacun des masques de zones de dimensions pour isoler les bits de décalage local pour chaque dimension de tableau ; et
des moyens destinés à combiner les bits de décalage local isolés pour chaque dimension de tableau afin de former le décalage local.

**18.** Dans un système informatique ayant une pluralité d'éléments de traitement, dans lequel chaque élément de traitement comprend une mémoire locale ayant une pluralité de positions de mémoire locale, comprenant une première position de mémoire locale, un procédé d'adressage d'un premier élément de tableau d'une pluralité d'éléments de tableau, dans lequel le premier élément de tableau est stocké dans la première position de mémoire d'un élément de traitement particulier, dans lequel chaque élément de tableau est associé à un index linéarisé, et dans lequel chaque index linéarisé comporte P bits de numéro d'élément de traitement et L bits de décalage de mémoire locale, le procédé comprenant les étapes qui consistent :

à générer un mot de masque, le mot de masque ayant P+L bits de mot de masque ; et
à centrifuger le mot de masque et l'index linéarisé pour obtenir un numéro d'élément de traitement associé à l'élément de traitement particulier et une adresse de mémoire locale associée à la première position de mémoire.

**19.** procédé selon la revendication 18, dans lequel chaque bit de mot de masque associe un bit de numéro d'élément de traitement à une première valeur d'état booléenne et un bit de décalage de mémoire locale à une seconde valeur d'état booléenne, et dans lequel l'étape de centrifugation comprend les étapes qui consistent :

à appliquer chaque bit d'index linéarisé à un bit de mot de masque associé ;
à transposer des positions des premières valeurs d'état booléennes et des secondes valeurs d'état booléennes dans les bits de mot de masque jusqu'à ce que les premières valeurs d'état booléennes occupent les positions des bits les plus significatifs dans le mot de masque ; et

à transposer les bits d'index linéarisé conformément aux bits de mot de masque ;
grâce à quoi les bits transposés de l'index linéarisé forment un mot enchaîné de P bits de numéro d'élément de traitement et de L bits de décalage de mémoire locale.

**20.** Procédé selon la revendication 18, dans lequel l'étape de centrifugation comprend les étapes qui consistent :

a) à appliquer chaque bit de l'index linéarisé à un bit de masque associé ;
b) à stocker le mot de masque dans un registre de masque ;
c) à stocker l'index linéarisé dans un registre d'index linéarisé ;
d) à diviser de façon répétitive les bits de masque en une pluralité de sous-mots, jusqu'à ce que chaque sous-mot de la pluralité de sous-mots ait une longueur inférieure à trois bits ;
e) à centrifuger chaque sous-mot de la pluralité de sous-mots et à translater les bits associés de l'index linéarisé ;
f) à grouper des sous-mots de la pluralité de sous-mots en groupes de sous-mots ;
g) à centrifuger des groupes de sous-mots et à translater les bits associés de l'index linéarisé ; et
h) à répéter les étapes f) et g) jusqu'à ce que le mot de masque soit totalement centrifugé ;

grâce à quoi les bits transposés de l'index linéarisé forment un mot enchaîné de P bits de numéro d'élément de traitement et de L bits de décalage de mémoire locale.

**21.** Procédé selon la revendication 18, dans lequel chaque bit de mot de masque associe un bit de numéro d'élément de traitement à une première valeur d'état booléenne et un bit de décalage de mémoire locale à une seconde valeur d'état booléenne, dans lequel l'étape de génération d'un mot de masque comprend la construction du mot de masque à partir d'une spécification de distribution et dans lequel l'étape de centrifugation comprend les étapes qui consistent :

a) à appliquer chaque bit de l'index linéarisé à un bit de masque associé ;
b) à stocker le mot de masque dans un registre de masque ;
c) à séparer l'index linéarisé en N bits séparés ;
d) à rechercher une transition entre des bits d'élément de traitement et des bits de décalage dans des paires de bits adjacents du masque à N bits ;
e) si une transition est détectée entre une paire de bits adjacents, à transposer la paire de bits adjacents pour former un résultat de masque pour chaque paire et à transposer des bits dans des positions de bits équivalentes dans l'index linéarisé afin de former un résultat d'index pour chaque paire ;
f) à rechercher une transition entre des bits d'élément de traitement et des bits de décalage dans des paires adjacentes de résultats de masque ;
g) si une transition est détectée dans une paire adjacente de résultats de masque, à transposer la paire adjacente de résultats de masque pour former un résultat de masque et à transposer des bits dans des positions de bits équivalentes de paires de résultats d'index adjacentes pour former un résultat d'index pour chaque paire de résultats d'index ; et
h) à répéter les étapes f) et g) jusqu'à ce qu'un résultat d'index à N bits soit formé.

**22.** Centrifugeuse d'adresse pour un système informatique ayant une pluralité d'éléments de traitement, comportant :

des moyens destinés à recevoir un mot de masque associé à un tableau ;
des moyens destinés à recevoir un index linéarisé associé à un élément du tableau ;
des moyens destinés à calculer, en fonction du mot de masque et de l'index linéarisé, un numéro d'élément de traitement, le numéro d'élément de traitement étant le numéro de l'élément de traitement auquel l'élément est stocké ; et
des moyens destinés à calculer, en fonction du mot de masque et de l'index linéarisé, l'adresse de mémoire à laquelle l'élément est stocké dans cet élément de traitement.

**23.** Centrifugeuse d'adresse selon la revendication 22, comportant en outre :

des moyens récursifs destinés à centrifuger de façon récursive le mot de masque et l'index linéarisé pour calculer le numéro d'élément de traitement et l'adresse de mémoire, les moyens récursifs étant agencés de façon a) à diviser le mot de masque en une pluralité de sous-mots, b) à centrifuger les sous-mots pour donner des sous-mots centrifugés et transposer l'index linéarisé en correspondance avec les sous-mots centrifugés, c) à grouper les sous-mots centrifugés en groupes de sous-mots, d) à centrifuger les groupes de sous-mots pour donner des groupes centrifugés de sous-mots et pour transposer l'index linéarisé en correspondance avec les groupes centrifugés de sous-mots, et e) à répéter c) et d) jusqu'à ce que le mot de masque soit totalement centrifugé afin que l'index linéarisé transposé comprenne le numéro d'élément de traitement enchaîné avec l'adresse de mémoire.

**24.** Centrifugeuse d'adresse selon la revendication 23, comportant en outre des moyens destinés à détecter la position d'une transition entre une paire de bits adjacents dans un groupe de sous-mots centrifugés.

**25.** Elément de traitement pour un système informatique ayant une pluralité d'éléments de traitement, comportant :

un processeur ;
une mémoire comprenant une pluralité de positions de mémoire ;
des moyens de transfert destinés à transférer des données avec un autre élément de traitement dans le système informatique, les moyens de transfert comportant une centrifugeuse d'adresse selon l'une quelconque des revendications 22 à 24.

**26.** Elément de traitement selon la revendication 25, comportant en outre des moyens destinés à recevoir une spécification de distribution spécifiant la distribution d'un tableau et des moyens destinés à inférer un mot de masque, associé au tableau, à partir de la spécification de distribution.

**27.** Elément de traitement selon la revendication 25, comportant en outre des moyens destinés à additionner l'adresse calculée par la centrifugeuse d'adresse à une adresse de base afin d'obtenir l'adresse de mémoire à laquelle l'élément est stocké dans l'élément de traitement auquel l'élément est stocké.

## Patentansprüche

**1.** Verfahren in einem Computersystem mit mehreren ein erstes Verarbeitungselement einschließenden Verarbeitungselementen, die jeweils einen Prozessor und einen lokalen Speicher mit mehreren Speicherplätzen enthalten, wobei ein erstes Feldelement innerhalb eines Felds adressiert wird, das mehrere entsprechend einer Verteilungsvorgabe über ein oder mehrere der Verarbeitungselemente verteilte Feldelemente aufweist, mit folgenden Schritten:

Zuordnen einer Verarbeitungselement-Nummer zu jedem Verarbeitungselement,
Zuordnen einer lokalen Speicheradresse zu jedem Speicherplatz,
Zuordnen eines jeweils mehrere Bits beinhaltenden linearisierten Index zu jedem Feldelement, wobei der Schritt des Zuordnens eines linearisierten Index einen Schritt zum Zuordnen eines ersten linearisierten Index zu dem ersten Feldelement beinhaltet,
Berechnen der Verarbeitungselement-Nummer desjenigen Verarbeitungselements, wo das erste Feldelement gespeichert ist, als Funktion des ersten linearisierten Index und der Verteilungsvorgabe, und
Berechnen der lokalen Speicheradresse des Speicherplatzes, in dem das erste Feldelement gespeichert ist, als Funktion des ersten linearisierten Index und der Verteilungsvorgabe.

**2.** Verfahren nach Anspruch 1, wobei der Schritt zum Berechnen der lokalen Speicheradresse die folgenden Schritte umfaßt:

Bereitstellen einer lokalen Basisadresse für das Feld,
Berechnen eines lokalen Offsets als Funktion des ersten linearisierten Index und der Verteilungsvorgabe, und
Addieren der lokalen Basisadresse zum lokalen Offset, um die lokale Speicheradresse des Speicherplatzes zu bilden, in dem das erste Feldelement gespeichert ist.

**3.** Verfahren nach Anspruch 1, wobei der Schritt zum Berechnen der Verarbeitungselement-Nummer folgende Schritte umfaßt:

Aufbauen einer Maske mit mehreren Masken-Bitfeldern, wobei der Aufbauschritt folgende Schritte umfaßt:

Einfügen einer Eins in jedes Masken-Bitfeld, das zur Bestimmung der Verarbeitungselement-Nummer verwendet wird, und
Einfügen einer Null in alle anderen Masken-Bitfelder,

Anwenden der Maske auf den ersten linarisierten Index, wobei der Anwendeschritt einen Schritt zum Trennen von Bits im ersten linearisierten Index umfaßt, so daß Index-Bits an mit Einsen in den Masken-Bitfeldern bezeichneten Plätzen innerhalb einer ersten Gruppe an Bits und Index-Bits an mit Nullen in den Masken-Bitfeldern bezeichneten Plätzen innerhalb einer zweiten Gruppe an Bits angeordnet werden, und
Anordnen der ersten Gruppe an Bits unter Bildung der Verarbeitungselement-Nummer.

**4.** Verfahren nach Anspruch 3, wobei der Schritt zum Berechnen der lokalen Speicheradresse folgende Schritte umfaßt:

Anordnen der zweiten Gruppe an Bits unter Bildung eines lokalen Offsets, und
Addieren einer lokalen Basisadresse zum lokalen Offset, um die lokale Speicheradresse des Speicherplatzes zu gewinnen, in dem das erste Feldelement gespeichert ist.

**5.** Verfahren in einem Computersystem mit mehreren ein erstes Verarbeitungselement umfassenden Verarbeitungselementen, die jeweils einen Prozessor und einen mehrere Speicherplätze beinhaltenden lokalen Speicher aufweisen, wobei ein erstes Feldelement innerhalb eines mehrdimensionalen Felds adressiert wird, das mehrere entsprechend einer Verteilungsvorgabe über eines oder mehrere Verarbeitungselemente verteilte Feldelemente aufweist, und das erste Feldelement in dem ersten Verarbeitungselement gespeichert ist, mit folgenden Schritten:

Zuordnen einer Verarbeitungselement-Nummer zu jedem Verarbeitungselement,
Zuordnen einer lokalen Speicheradresse zu jedem Speicherplatz,
Bestimmen der Verarbeitungselement-Nummer und der dem Speicherplatz, in dem das erste Feldelement gespeichert ist, zugeordneten lokalen Speicheradresse, wobei der Bestimmungsschritt folgende Schritte umfaßt:

Trennen eines dem ersten Feldelement zugeordneten linearisierten Index in mehrere Dimensionsfelder, die jeweils einer bestimmten Felddimension zugeordnet sind,
Trennen jedes Dimensionsfelds in ein Verarbeitungselement-Feld und ein Blockfeld,
Verketten der Verarbeitungselement-Felder von jedem der Dimensionsfelder in vorbestimmter Reihenfolge, um die Verarbeitungselement-Nummer zu bilden,
Verketten der Blockfelder von jedem der Dimensionsfelder in vorbestimmter Reihenfolge, um einen lokalen Offset zu bilden, und
Addieren einer lokalen Basisadresse zum lokalen Offset, um die lokale Speicheradresse des Speicherplatzes zu bilden, in dem das erste Feldelement gespeichert ist.

**6.** Verfahren nach Anspruch 5, wobei der Schritt zum Trennen jedes Dimensionsfelds folgende Schritte umfaßt:

Anwenden einer ersten Maske auf den linearisierten Index, um ein erstes Ergebnis mit Bits zu bilden, die den Verarbeitungselement-Feldern zugeordnet sind, und
Anwenden einer zweiten Maske auf den linearisierten Index, um ein zweites Ergebnis mit Bits zu bilden, die den Blockfeldern zugeordnet sind.

**7.** Verfahren nach Anspruch 5, wobei der Schritt zum Trennen jedes Dimensionsfelds folgende Schritte umfaßt:

Trennen jedes Dimensionsfelds in ein Zyklusfeld, ein Verarbeitungselement-Feld und ein Blockgrößenfeld, und
Verketten der Zyklus- und Blockgrößenfelder von jedem der Dimensionsfelder zur Bildung des Blockfelds für dieses Dimensionsfeld.

**8.** Verfahren nach Anspruch 7, wobei der Schritt zum Trennen jedes Dimensionsfelds in ein Zyklusfeld, ein Verarbeitungselement-Feld und ein Blockgrößenfeld folgende Schritte umfaßt:

Anwenden einer ersten Maske auf den linearisierten Index, um ein erstes Ergebnis mit Bits zu bilden, die den Verarbeitungselement-Feldern zugeordnet sind, und
Anwenden einer zweiten Maske auf den linearisierten Index, um ein zweites Ergebnis mit Bits zu bilden, die den Zyklus- und Blockgrößenfeldern zugeordnet sind.

**9.** Verfahren nach Anspruch 7, wobei der Schritt zum Trennen jedes Dimensionsfelds in ein Zyklusfeld, ein Verarbeitungselement-Feld und ein Blockgrößenfeld folgende Schritte umfaßt:

Bilden einer ersten Dimensionsfeld-Maske für jede Felddimension, um in jeder Felddimension Verarbeitungselement-Nummernbits zu isolieren,
Bilden einer zweiten Dimensionsfeld-Maske für jede Felddimension, um in jeder Felddimension Lokaloffsetbits zu isolieren, und
Anwenden der ersten Dimensionsfeldmaske und der zweiten Dimensionsfeldmaske für jede Dimension auf den linearisierten Index, um für diese Dimension jeweils einen Verarbeitungselement-Identifizierer und einen Lokaloffset-Identifizierer zu bilden, wobei der Lokaloffset-Identifizierer das Zyklusfeld und das Blockgrößenfeld für diese Dimension beinhaltet.

**10.** Computersystem, aufweisend:

mehrere ein erstes Verarbeitungselement einschließende Verarbeitungselemente, die jeweils umfassen:

einen Prozessor, und
einen lokalen Speicher, der jeweils mehrere Speicherplätze aufweist, und

ein die Verarbeitungselemente verbindendes Verbindungsnetzwerk,
wobei die Verarbeitungselemente außerdem Übertragungseinrichtungen zur Übertragung von in dem lokalen Speicher eines Verarbeitungselements gespeicherten Daten an den lokalen Speicher eines anderen Verarbeitungselements aufweisen und wobei die Übertragungseinrichtung eine Adresszentrifuge aufweist, die umfaßt:

eine Einrichtung zum Berechnen einer Verarbeitungselement-Nummer als Funktion eines Maskenworts und eines einem ersten Feldelement zugeordneten linearisierten Index, und
eine Einrichtung zum Berechnen der lokalen Speicheradresse des Speicherplatzes, an dem das erste Feldelement gespeichert ist, als Funktion des Maskenworts und des linearisierten Index.

**11.** System nach Anspruch 10, wobei die Übertragungseinrichtung außerdem eine Blockübertragungs-Engine zur Übertragung von Blöcken von Feldelementen zwischen Verarbeitungselementen aufweist.

**12.** Verarbeitungssystem nach Anspruch 10 oder 11, wobei die Adresszentrifuge aufweist:

eine Linearisierindex-Empfangseinrichtung zum Empfang eines linearisierten Index,
eine Verteilungsvorgaben-Empfangseinrichtung zum Empfang einer eine Feldverteilung angebenden Verteilungsvorgabe,
eine mit der Linearisierindex-Empfangseinrichtung und der Verteilungsvorgaben-Empfangseinrichtung verbundene Zentrifugiereinrichtung zum Gewinnen einer Verarbeitungselement-Nummer und einer lokalen Speicheradresse aus dem linearisierten Index als Funktion der Verteilungsvorgabe.

**13.** System nach Anspruch 12, wobei der linearisierte Index Verarbeitungselement-Nummernbits und Lokaloffsetbits beinhaltet und die Zentrifugiereinrichtung aufweist:

eine Maskenerzeugungseinrichtung zur Erzeugung einer Maske aus der Verteilungsvorgabe,
eine mit der Maskenerzeugungseinrichtung verbundene Verarbeitungselement-Nummerngewinnungseinrichtung zum Gewinnen der Verarbeitungselement-Nummer aus dem linearisierten Index, wobei die Verarbeitungselement-Nummerngewinnungseinrichtung aufweist:

eine Einrichtung zum Maskieren des linearen Index, um Verarbeitungselement-Nummernbits zu isolieren, und
eine Einrichtung zum Verschieben der Verarbeitungselement-Nummernbits, um die Verarbeitungselement-Nummer zu bilden, und

eine mit der Maskenerzeugungseinrichtung verbundene Lokaloffset-Gewinnungseinrichtung zum Gewinnen eines lokalen Offsets aus dem linearisierten Index, wobei die Lokaloffset-Gewinnungseinrichtung aufweist:

eine Einrichtung zum Maskieren des linearisierten Index, um die Lokaloffsetbits zu isolieren, und
eine Einrichtung zum Verschieben der Lokaloffsetbits, um den lokalen Offset zu bilden.

**14.** Computersystem nach Anspruch 12, wobei die Zentrifugiereinrichtung aufweist:

eine Zentrifuge zum Extrahieren einer Verarbeitungselement-Nummer und eines lokalen Offsets aus dem linearisierten Index als Funktion der Verteilungsvorgabe,
eine Einrichtung zum Empfang einer lokalen Basisadresse, und
eine Einrichtung zum Kombinieren der lokalen Basisadresse mit dem lokalen Offset, um die lokale Speicheradresse zu bilden.

**15.** Computersystem nach Anspruch 12, wobei die Verteilungsvorgabe einen Dimensionsverteilungsindikator für jede einer Vielzahl von Felddimensionen aufweist und die Zentrifugiereinrichtung eine Einrichtung zum Gewinnen einer Verarbeitungselement-Nummer und einer lokalen Speicheradresse aus dem linearisierten Index als Funktion des Dimensionsverteilungsindikators aufweist.

**16.** Computersystem nach Anspruch 15, wobei der linearisierte Index Verarbeitungselement-Nummernbits und Lokaloffsetbits beinhaltet und wobei die Zentrifuge aufweist:

eine Maskenerzeugungseinrichtung zum Erzeugen einer Maske aus den Verteilungsindikatoren,
eine mit der Maskenerzeugungseinrichtung verbundene Verarbeitungselement-Nummerngewinnungseinrichtung zum Gewinnen der Verarbeitungselement-Nummer aus dem linearisierten Index, wobei die Verarbeitungselement-Nummerngewinnungseinrichtung aufweist:

eine Einrichtung zum Maskieren des linearisierten Index, um die Verarbeitungselement-Nummernbits zu isolieren, und
eine Einrichtung zum Verschieben der Verarbeitungselement-Nummernbits, um die Verarbeitungselement-Nummer zu bilden, und

eine mit der Maskenerzeugungseinrichtung verbundene Lokaloffset-Gewinnungseinrichtung zum Gewinnen eines lokalen Offsets aus der linearisierten Adresse, wobei die Lokaloffset-Gewinnungseinrichtung aufweist:

eine Einrichtung zum Maskieren des linearisierten Index, um die Lokaloffsetbits zu isolieren, und
eine Einrichtung zum Verschieben der Lokaloffsetbits, um den lokalen Offset zu bilden.

**17.** Computersystem nach Anspruch 15, wobei der linearisierte Index Verarbeitungselement-Nummernbits und Lokaloffsetbits beinhaltet und wobei die Zentrifuge aufweist:

eine Maskenerzeugungseinrichtung zum Erzeugen einer Dimensionsfeldmaske aus jedem der Dimensionsverteilungsindikatoren,
eine mit der Maskenerzeugungseinrichtung verbundene Verarbeitungselement-Nummerngewinnungseinrichtung zum Gewinnen der Verarbeitungselement-Nummer aus dem linearisierten Index, wobei die Verarbeitungselement-Nummerngewinnungseinrichtung aufweist:

eine Einrichtung zum Maskieren des linearisierten Index mit jeder der Dimensionsfeldmasken, um die Verarbeitungselement-Nummernbits für jede Felddimension zu isolieren, und
eine Einrichtung zum Kombinieren der für jede Felddimension isolierten Verarbeitungselement-Nummernbits, um die Verarbeitungselement-Nummer zu bilden, und

eine mit der Maskenerzeugungseinrichtung verbundene Lokaloffset-Gewinnungseinrichtung zum Gewinnen eines lokalen Offsets aus der linearisierten Adresse, wobei die Lokaloffset-Gewinnungseinrichtung aufweist:

eine Einrichtung zum Maskieren des linearisierten Index mit jeder der Dimensionsfeldmasken, um die Lokaloffsetbits für jede Felddimension zu isolieren, und
eine Einrichtung zum Kombinieren der für jede Felddimension isolierten Lokaloffsetbits, um den lokalen Offset zu bilden.

**18.** Verfahren in einem Computersystem mit mehreren Verarbeitungselementen, die jeweils einen lokalen Speicher mit mehreren einen ersten lokalen Speicherplatz einschließenden lokalen Speicherplätzen beinhalten, wobei ein erstes Feldelement mehrerer Feldelemente, das auf dem ersten Speicherplatz eines bestimmten Verarbeitungselements gespeichert ist, adressiert wird und wobei jedes Feldelement einem linearisierten Index zugeordnet ist und jeder linearisierte Index P Verarbeitungselement-Nummernbits und L Lokalspeicher-Offsetbits beinhaltet, mit folgenden Schritten:

Erzeugen eines Maskenworts, das P+L-Maskenwortbits aufweist, und
Zentrifugieren des Maskenworts und des linearisierten Index, um eine dem bestimmten Verarbeitungselement zugeordnete Verarbeitungselement-Nummer und eine dem ersten Speicherplatz zugeordnete lokale Speicheradresse zu gewinnen.

**19.** Verfahren nach Anspruch 18, wobei jedes Maskenwortbit ein Verarbeitungselement-Nummernbit einem ersten booleschen Zustandswert und ein Lokalspeicher-Offsetbit einem zweiten booleschen Zustandswert zuordnet und wobei der Schritt zum Zentrifugieren folgende Schritte aufweist:

Abbilden jedes linearisierten Indexbits auf ein zugeordnetes Maskenwortbit,
Umsetzen von Positionen der ersten booleschen Zustandswerte und der zweiten booleschen Zustandswerte in den Maskenwortbits, bis die ersten booleschen Zustandswerte die höchstwertigen Bitpositionen im Maskenwort besetzen, und
Umsetzen der linearisierten Indexbits entsprechend den Maskenwortbits,
wodurch die umgesetzten Bits des linearisierten Index ein verkettetes Wort aus P Verarbeitungselement-Nummernbits und L Lokalspeicher-Offsetbits bilden.

**20.** Verfahren nach Anspruch 18, wobei der Schritt zum Zentrifugieren folgende Schritte umfaßt:

a) Abbilden jedes Bits des linearisierten Index auf ein zugeordnetes Maskenbit,
b) Speichern des Maskenworts in einem Maskenregister,
c) Speichern des linearisierten Index in einem linearisierten Indexregister,
d) wiederholtes Teilen des Maskenbits in mehrere Teilworte, bis jedes der Teilworte weniger als drei Bits lang ist,
e) Zentrifugieren jedes der Teilworte und Übersetzen der zugeordneten Bits des linearisierten Index,
f) Gruppieren von Teilworten der mehreren Teilworte in Gruppen aus Teilworten,
g) Zentrifugieren der Gruppen aus Teilworten und Übersetzen der zugeordneten Bits des linearisierten Index, und
h) Wiederholen der Schritte f) und g), bis das Maskenwort vollständig zentrifugiert ist,

wodurch die umgesetzten Bits des linearisierten Index ein verkettetes Wort von P Verarbeitungselement-Nummernbits und L Lokalspeicher-Offsetbits bilden.

**21.** Verfahren nach Anspruch 18, wobei jedes Maskenwortbit ein Verarbeitungselement-Nummernbit einem ersten booleschen Zustandswert und ein Lokalspeicher-Offsetbit einem zweiten booleschen Zustandswert zuordnet, wobei der Schritt zum Erzeugen eines Maskenworts das Aufbauen des Maskenworts aus einer Verteilungsvorgabe beinhaltet und wobei der Schritt zum Zentrifugieren folgende Schritte umfaßt:

a) Abbilden jedes Bits des linearisierten Index auf ein zugeordnetes Maskenbit,
b) Speichern des Maskenworts in einem Maskenregister,
c) Trennen des linearisierten Index in N getrennte Bits,
d) Suchen nach einem Übergang zwischen Verarbeitungselement-Bits und Offsetbits in Paaren benachbarter Bits der N-Bit-Maske,
e) wenn ein Übergang zwischen einem Paar benachbarter Bits erkannt wird, Umsetzen des Paars benachbarter Bits, um ein Maskenergebnis für jedes Paar zu bilden, und Umsetzen von Bits an entsprechenden Bitpositionen im linearisierten Index, um für jedes Paar ein Indexergebnis zu bilden,
f) Suchen nach einem Übergang zwischen Verarbeitungselement-Bits und Offsetbits in benachbarten Paaren an Maskenergebnissen,
g) wenn ein Übergang in einem benachbarten Paar an Maskenergebnissen erkannt wird, Umsetzen des benachbarten Paars an Maskenergebnissen, um ein Maskenergebnis zu bilden, und Umsetzen von Bits in entsprechenden Bitpositionen benachbarter Indexergebnispaare, um für alle Indexergebnispaare ein Indexergebnis zu bilden, und

h) Wiederholen der Schritte f) und g) bis ein N-Bit-Indexergebnis gebildet ist.

**22.** Adresszentrifuge für ein Computersystem mit mehreren Verarbeitungselementen, aufweisend:

eine Einrichtung zum Empfang eines einem Feld zugeordneten Maskenworts,
eine Einrichtung zum Empfang eines einem Element des Felds zugeordneten linearisierten Index,
eine Einrichtung zum Berechnen einer Verarbeitungselement-Nummer als Funktion des Maskenworts und des linearisierten Index, wobei die Verarbeitungselement-Nummer die Nummer des Verarbeitungselements ist, an dem das Element gespeichert wird, und
eine Einrichtung zum Berechnen der Speicheradresse, an der das Element innerhalb dieses Verarbeitungselements gespeichert ist, als Funktion des Maskenworts und des linearisierten Index.

**23.** Adresszentrifuge nach Anspruch 22, außerdem aufweisend:

eine Rekursionseinrichtung zum rekursiven Zentrifugieren des Maskenworts und des linearisierten Index, um die Verarbeitungselement-Nummer und die Speicheradresse zu berechnen, wobei die Rekursionseinrichtung eingerichtet ist,

a) das Maskenwort in mehrere Teilworte zu teilen,
b) die Teilworte zu zentrifugieren, um zentrifugierte Teilworte zu ergeben, und den linearisierten Index entsprechend den zentrifugierten Teilworten umzusetzen,
c) die zentrifugierten Teilworte in Gruppen von Teilworten zu gruppieren,
d) die Gruppen von Teilworten zu zentrifugieren, um zentrifugierte Gruppen von Teilworten zu ergeben, und um den linearisierten Index entsprechend den zentrifugierten Gruppen von Teilworten umzusetzen, und
e) um c) und d) zu wiederholen, bis das Maskenwort vollständig zentrifugiert ist, so daß der umgesetzte linearisierte Index die Verarbeitungselement-Nummer mit der Speicheradresse verkettet enthält.

**24.** Adresszentrifuge nach Anspruch 23 mit einer Einrichtung zum Erfassen der Position eines Übergangs zwischen einem Paar benachbarter Bits in einer Gruppe zentrifugierter Teilworte.

**25.** Verarbeitungselement für ein Computersystem mit mehreren Verarbeitungselementen, aufweisend:

einen Prozessor,
einen Speicher mit mehreren Speicherplätzen,
eine Übertragungseinrichtung zum Übertragen von Daten mit anderen Verarbeitungselementen in dem Computersystem, wobei die Verarbeitungseinrichtung eine Adresszentrifuge nach einem der Ansprüche 22 bis 24 enthält.

**26.** Verarbeitungselement nach Anspruch 25 mit einer Einrichtung zum Empfang einer Verteilungsvorgabe, die die Verteilung eines Felds angibt, und einer Einrichtung zum Erschließen eines Maskenworts, das dem Feld zugeordnet ist, aus der Verteilungsvorgabe.

**27.** Verarbeitungselement nach Anspruch 25 mit einer Einrichtung zum Addieren der von der Adresszentrifuge berechneten Adresse zu einer Basisadresse, um die Speicheradresse zu gewinnen, an der das Element innerhalb des Verarbeitungselements unter Speicherung des Elements gespeichert ist.

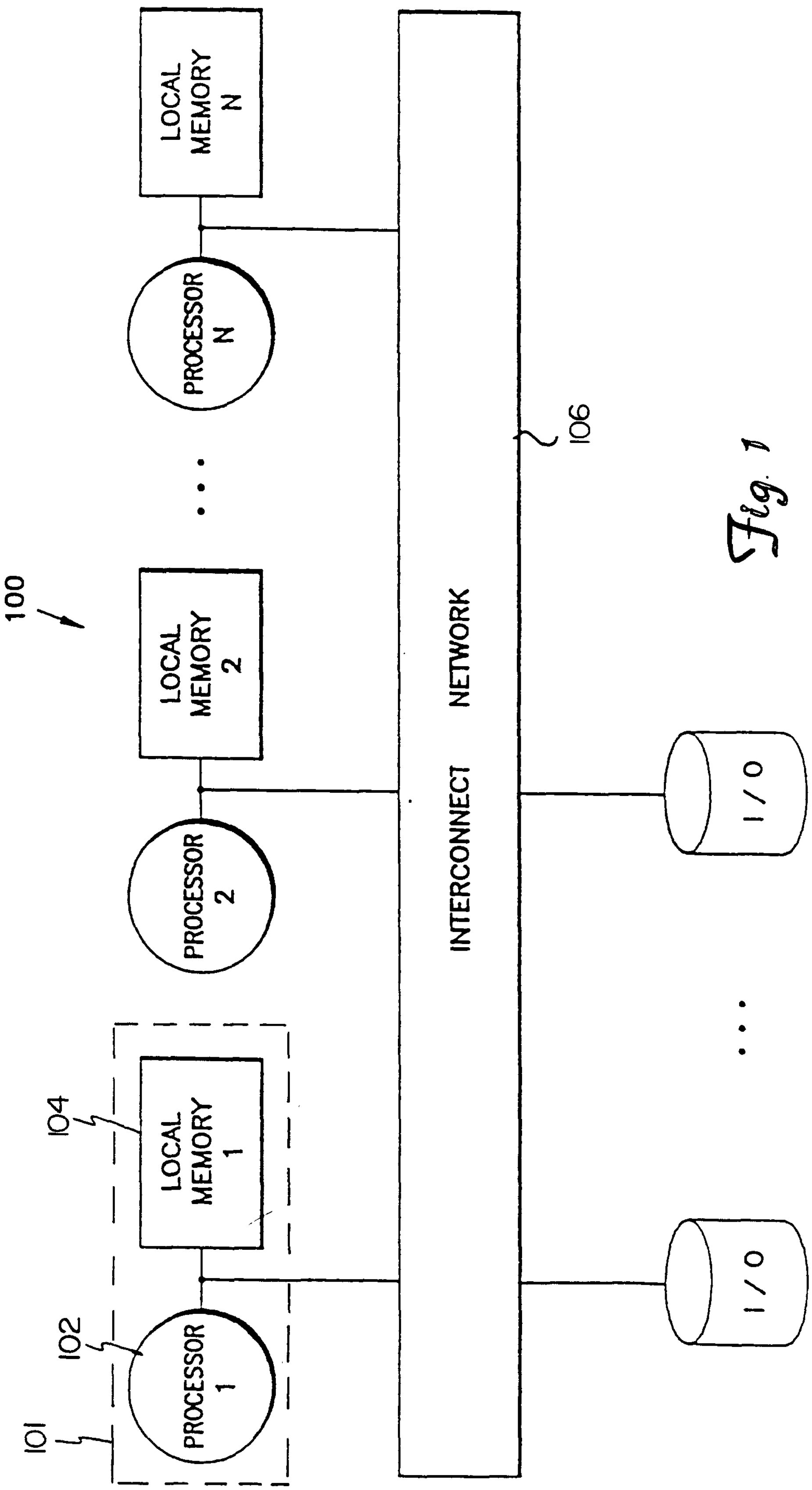
100
101
102
104
PROCESSOR 1
LOCAL MEMORY 1
PROCESSOR 2
LOCAL MEMORY 2
PROCESSOR N
LOCAL MEMORY N
INTERCONNECT NETWORK
106
I / O
I / O

Fig. 1

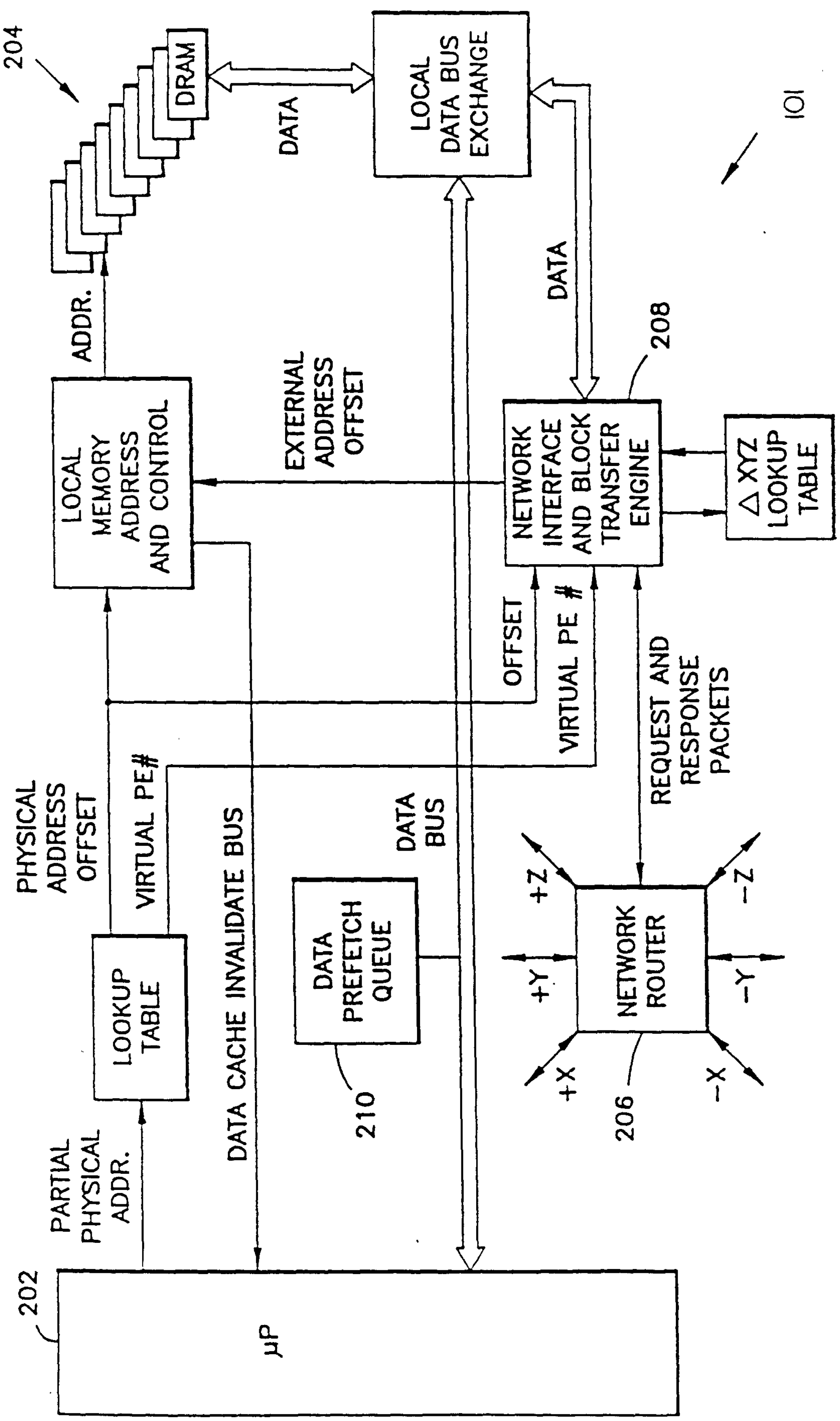
204
DRAM
DATA
LOCAL DATA BUS EXCHANGE
101
ADDR.
DATA
208
LOCAL MEMORY ADDRESS AND CONTROL
EXTERNAL ADDRESS OFFSET
NETWORK INTERFACE AND BLOCK TRANSFER ENGINE
Δ XYZ LOOKUP TABLE
OFFSET
VIRTUAL PE #
PHYSICAL ADDRESS OFFSET
VIRTUAL PE#
REQUEST AND RESPONSE PACKETS
DATA BUS
DATA CACHE INVALIDATE BUS
LOOKUP TABLE
DATA PREFETCH QUEUE
+Z
-Z
+Y
-Y
NETWORK ROUTER
+X
-X
206
210
PARTIAL PHYSICAL ADDR.
202
µP

Fig 2

| Distribution Across 4 PEs | | | | | | | | | | | | | | | |
|---|---|---|---|---|---|---|---|---|---|---|---|---|---|---|---|
| PE0 | | | | PE1 | | | | PE2 | | | | PE3 | | | |
| 1 | 5 | 9 | 13 | 2 | 6 | 10 | . | 3 | 7 | 11 | . | 4 | 8 | 12 | . |
| | | | | | | | | | | | | | | | |

Fig. 3a

| Distribution Across 4 PEs | | | | | | | | | | | | | | | |
|---|---|---|---|---|---|---|---|---|---|---|---|---|---|---|---|
| PE0 | | | | PE1 | | | | PE2 | | | | PE3 | | | |
| 1 | 2 | 9 | 10 | 3 | 4 | 11 | 12 | 5 | 6 | 13 | . | 7 | 8 | . | . |
| | | | | | | | | | | | | | | | |

Fig. 3b

| Distribution Across 4 PEs | | | | | | | | | | | | | | | |
|---|---|---|---|---|---|---|---|---|---|---|---|---|---|---|---|
| PE0 | | | | PE1 | | | | PE2 | | | | PE3 | | | |
| 1 | 2 | 3 | 4 | 5 | 6 | 7 | 8 | 9 | 10 | 11 | 12 | 13 | . | . | . |
| | | | | | | | | | | | | | | | |

Fig. 3c

| Distribution Across 4 PEs | | | | | | | | | | | | | | | |
|---|---|---|---|---|---|---|---|---|---|---|---|---|---|---|---|
| PE0 | | | | PE1 | | | | PE2 | | | | PE3 | | | |
| 1,1 | 1,2 | 1,3 | 1,4 | 1,5 | 1,6 | 1,7 | 1,8 | 1,9 | 1,10 | 1,11 | 1,12 | 1,13 | . | . | . |
| 2,1 | 2,2 | 2,3 | 2,4 | 2,5 | 2,6 | 2,7 | 2,8 | 2,9 | 2,10 | 2,11 | 2,12 | 2,13 | . | . | . |

Fig. 3d

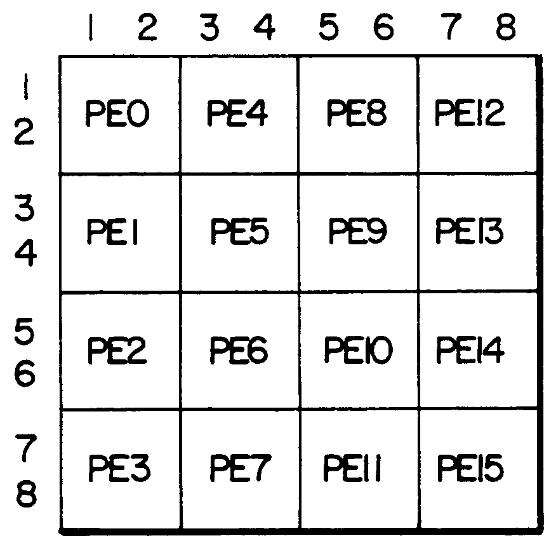
1 2 3 4 5 6 7 8
1 2
3 4
5 6
7 8
PE0
PE4
PE8
PE12
PE1
PE5
PE9
PE13
PE2
PE6
PE10
PE14
PE3
PE7
PE11
PE15

Fig. 3e

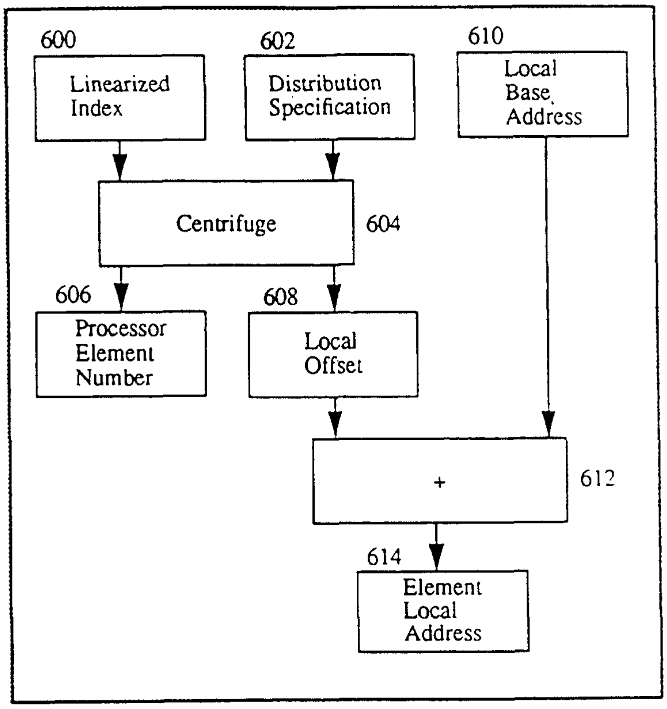
600
Linearized Index
602
Distribution Specification
610
Local Base Address
Centrifuge
604
606
Processor Element Number
608
Local Offset
+
612
614
Element Local Address

Fig. 4a

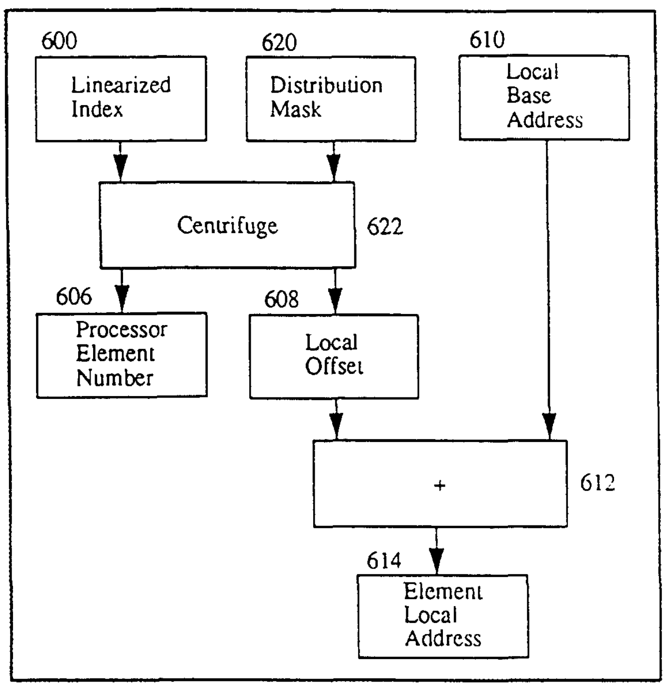
600
Linearized Index
620
Distribution Mask
610
Local Base Address
Centrifuge
622
606
Processor Element Number
608
Local Offset
+
612
614
Element Local Address

Fig. 4b

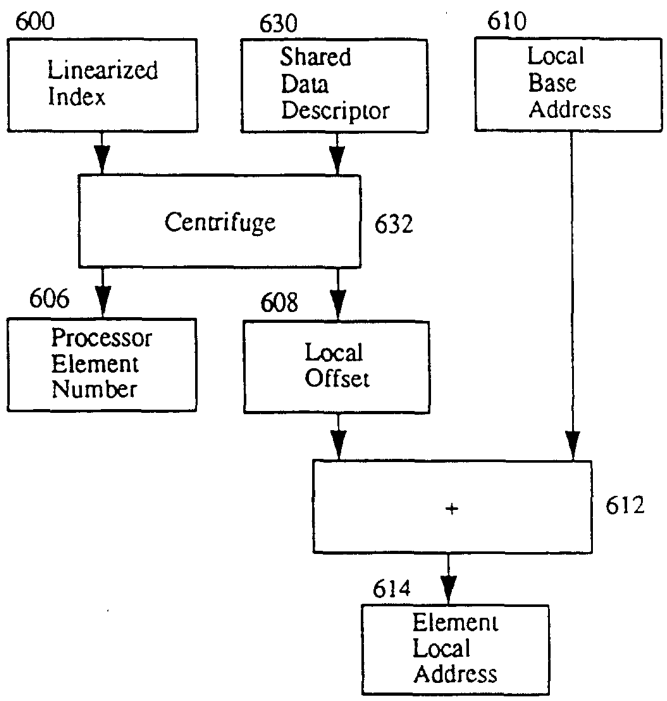
600
Linearized Index
630
Shared Data Descriptor
610
Local Base Address
Centrifuge
632
606
Processor Element Number
608
Local Offset
+
612
614
Element Local Address

Fig. 4c

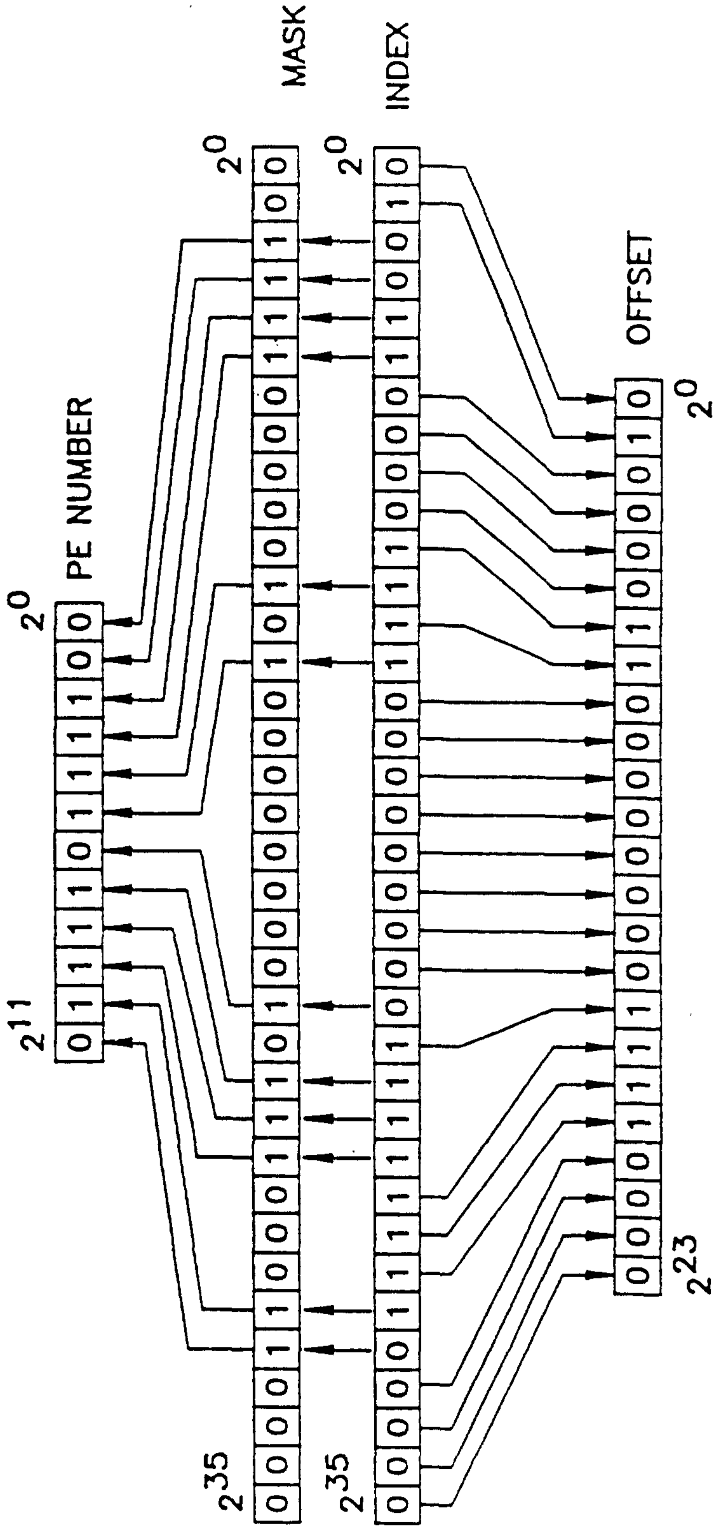


Fig. 5

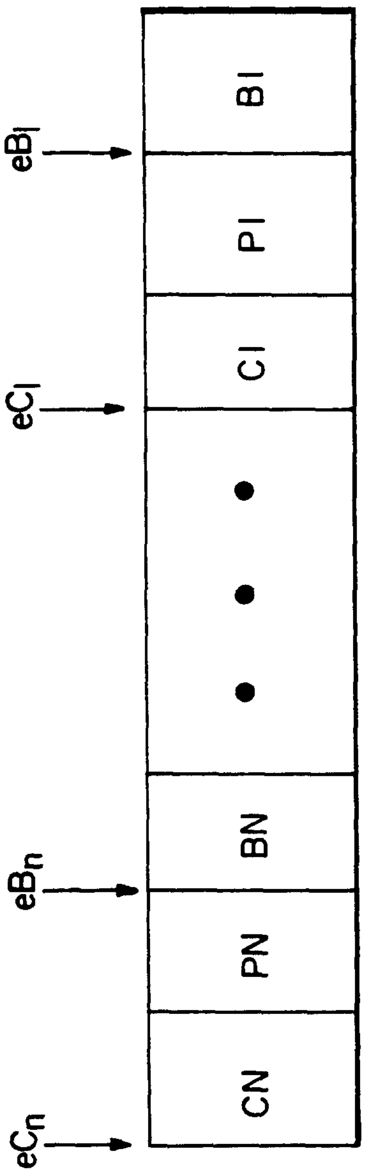


Fig. 6

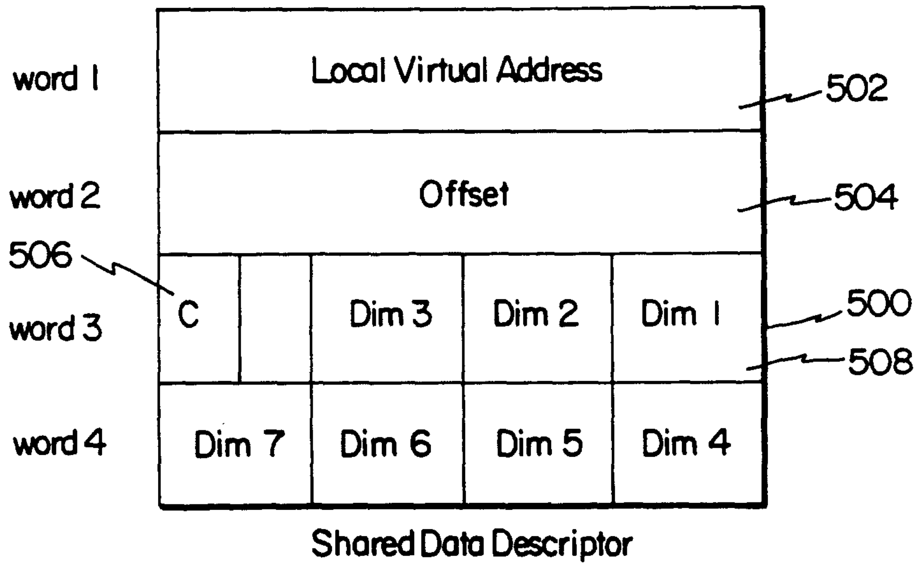
word 1
Local Virtual Address
502
word 2
Offset
504
506
word 3
C
Dim 3
Dim 2
Dim 1
500
508
word 4
Dim 7
Dim 6
Dim 5
Dim 4
Shared Data Descriptor

Fig. 7a

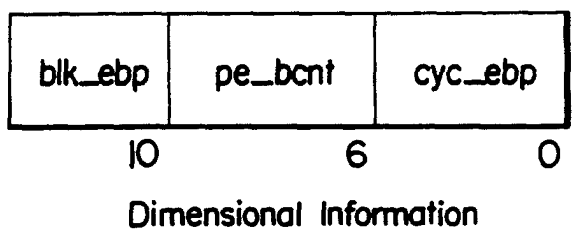
blk_ebp
pe_bcnt
cyc_ebp
10
6
0
Dimensional Information

Fig. 7b

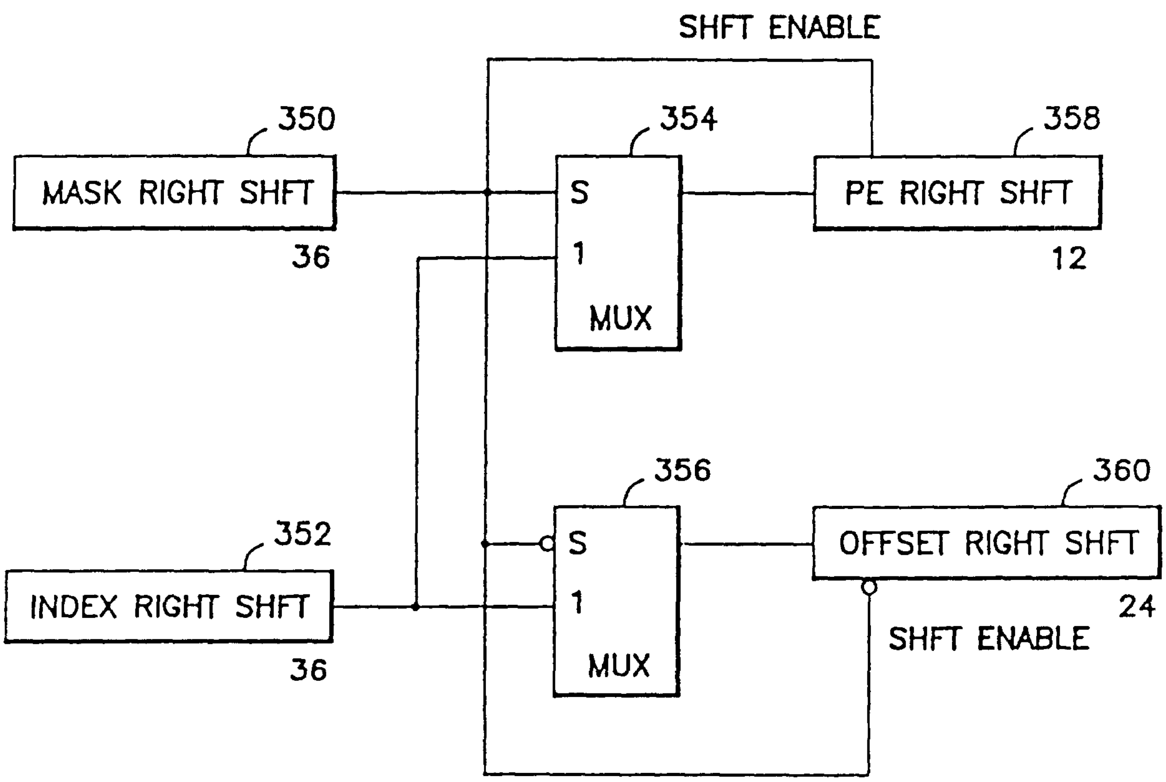
SHFT ENABLE
350
354
358
MASK RIGHT SHFT
S
PE RIGHT SHFT
36
1
12
MUX
356
360
352
S
OFFSET RIGHT SHFT
INDEX RIGHT SHFT
1
24
SHFT ENABLE
36
MUX

Fig. 8

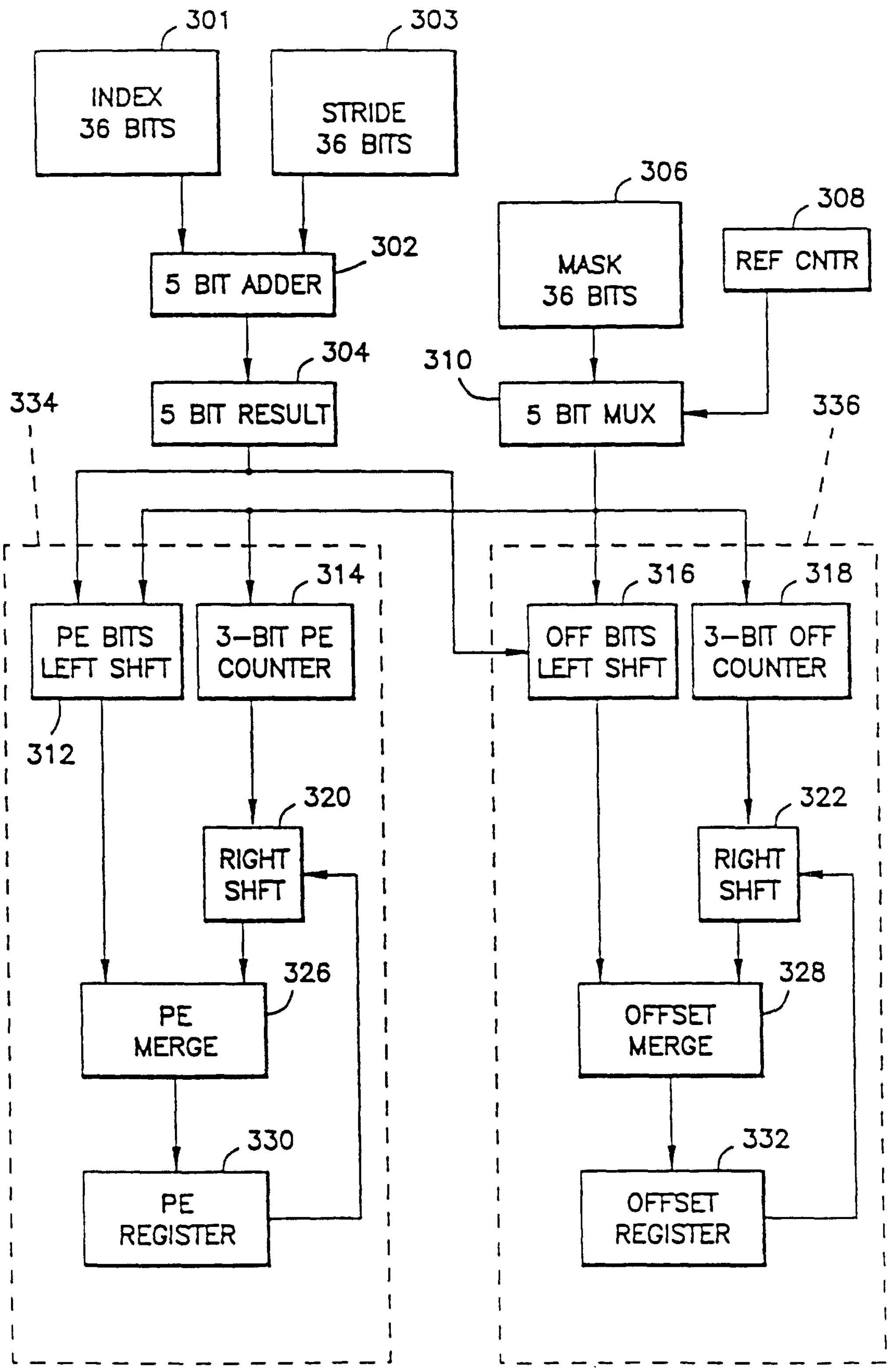
301
INDEX
36 BITS
303
STRIDE
36 BITS
302
5 BIT ADDER
304
5 BIT RESULT
306
MASK
36 BITS
308
REF CNTR
310
5 BIT MUX
334
336
PE BITS
LEFT SHFT
312
3-BIT PE
COUNTER
314
OFF BITS
LEFT SHFT
316
3-BIT OFF
COUNTER
318
RIGHT
SHFT
320
RIGHT
SHFT
322
PE
MERGE
326
OFFSET
MERGE
328
PE
REGISTER
330
OFFSET
REGISTER
332

Fig. 9

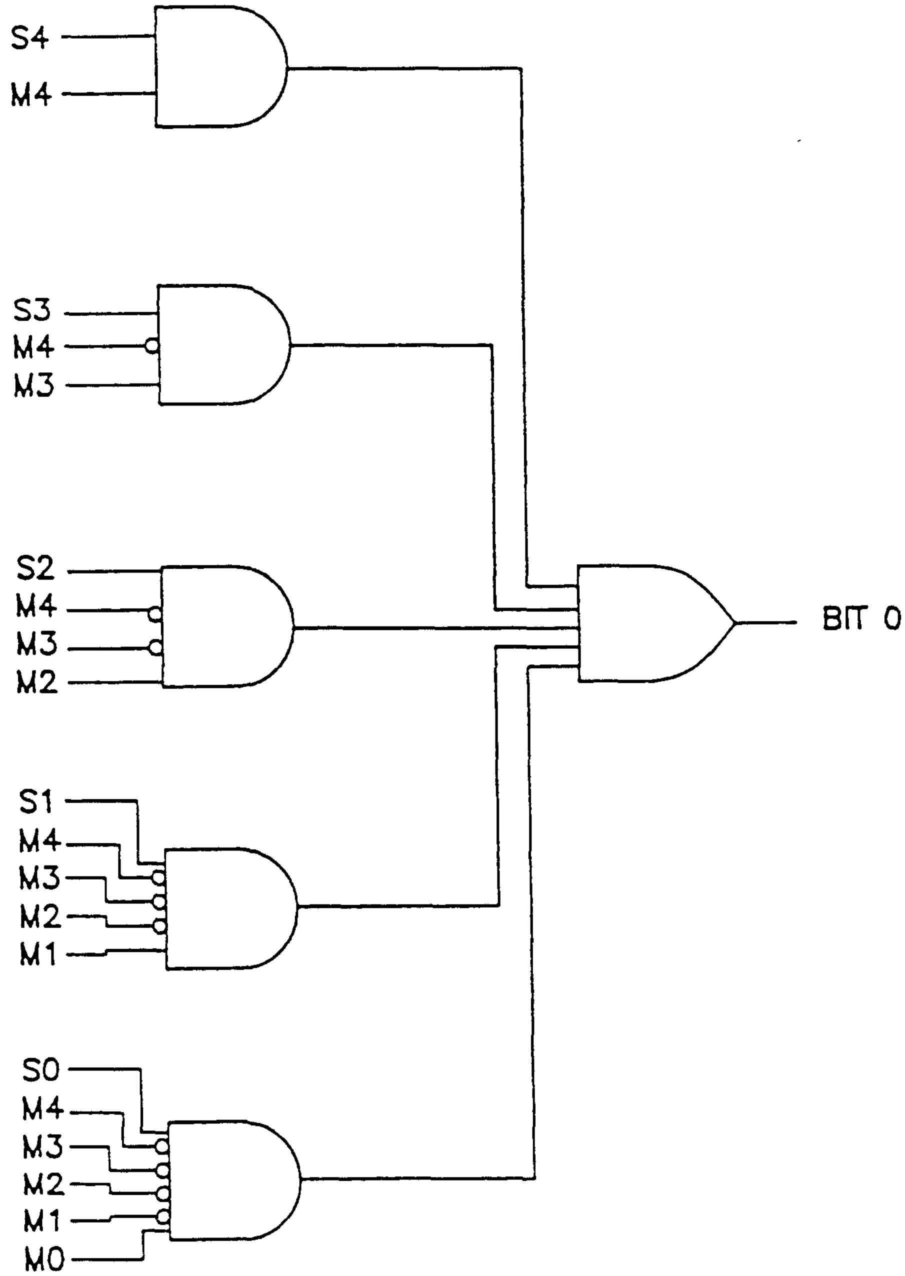


Fig. 10a

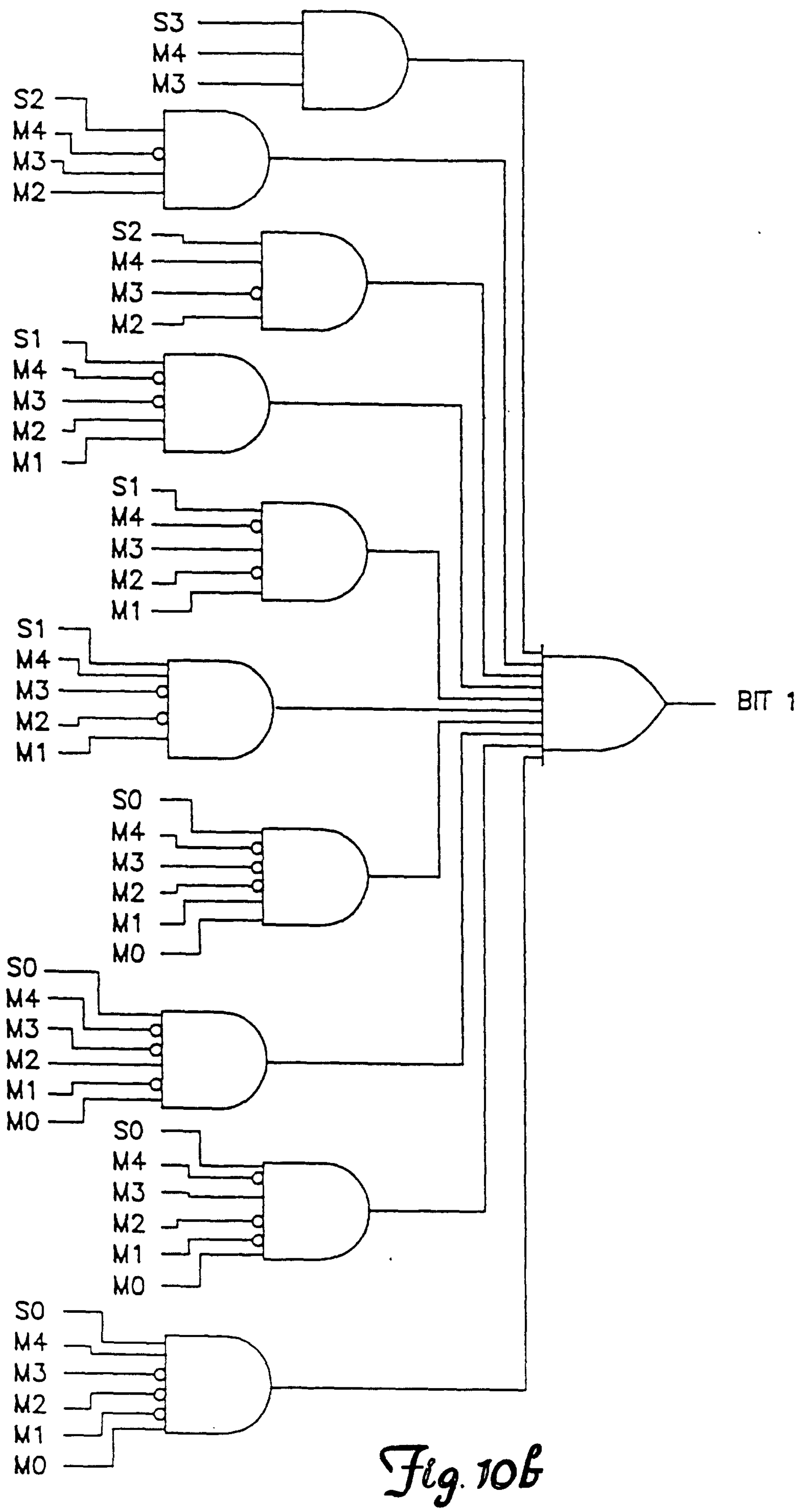
S3
M4
M3
S2
M4
M3
M2
S2
M4
M3
M2
S1
M4
M3
M2
M1
S1
M4
M3
M2
M1
S1
M4
M3
M2
M1
S0
M4
M3
M2
M1
M0
S0
M4
M3
M2
M1
M0
S0
M4
M3
M2
M1
M0
S0
M4
M3
M2
M1
M0
BIT 1

Fig. 10b

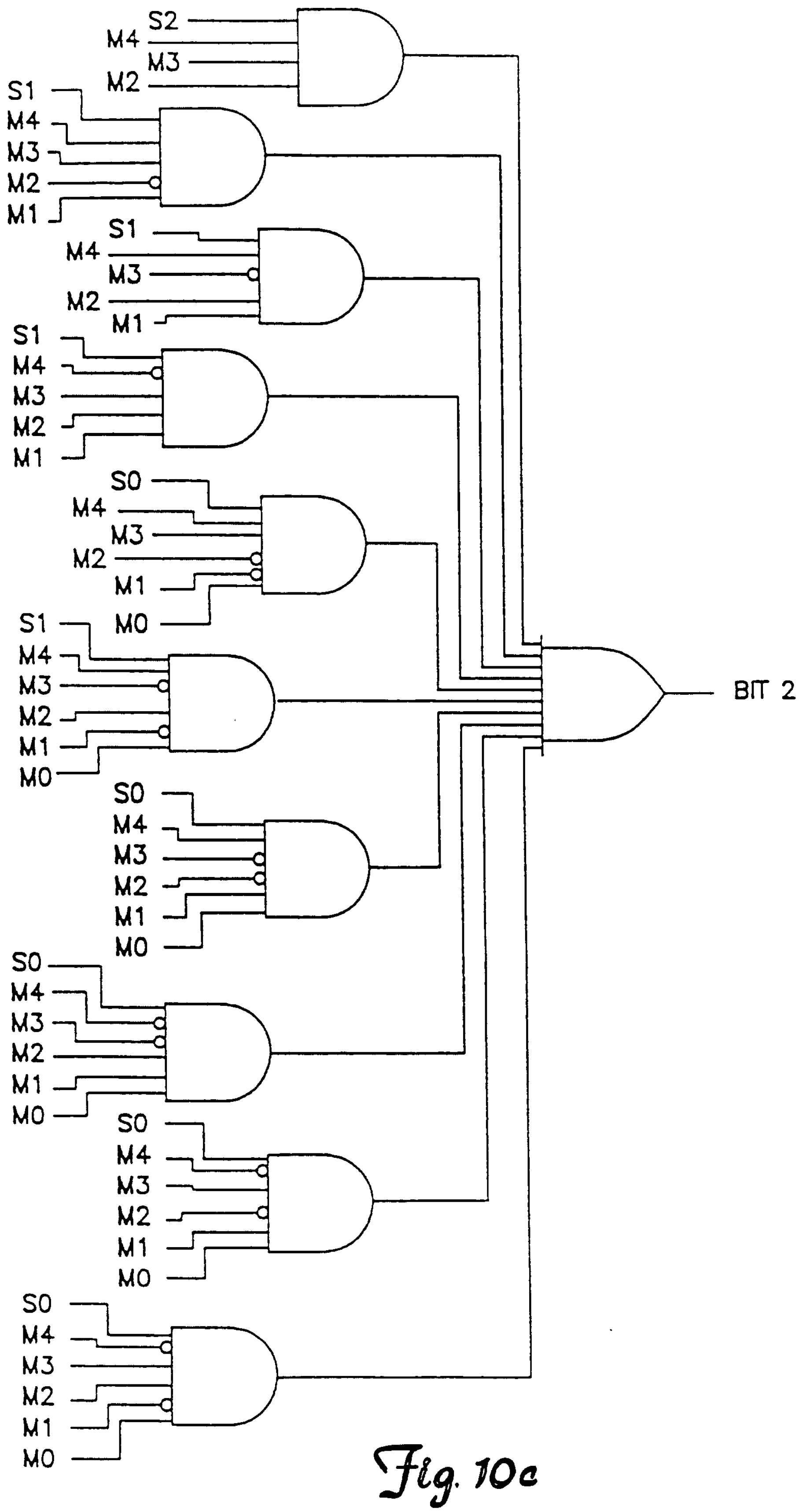
S2
M4
M3
M2
S1
M4
M3
M2
M1
S1
M4
M3
M2
M1
S1
M4
M3
M2
M1
S0
M4
M3
M2
M1
M0
S1
M4
M3
M2
M1
M0
S0
M4
M3
M2
M1
M0
S0
M4
M3
M2
M1
M0
S0
M4
M3
M2
M1
M0
S0
M4
M3
M2
M1
M0
BIT 2

Fig. 10c

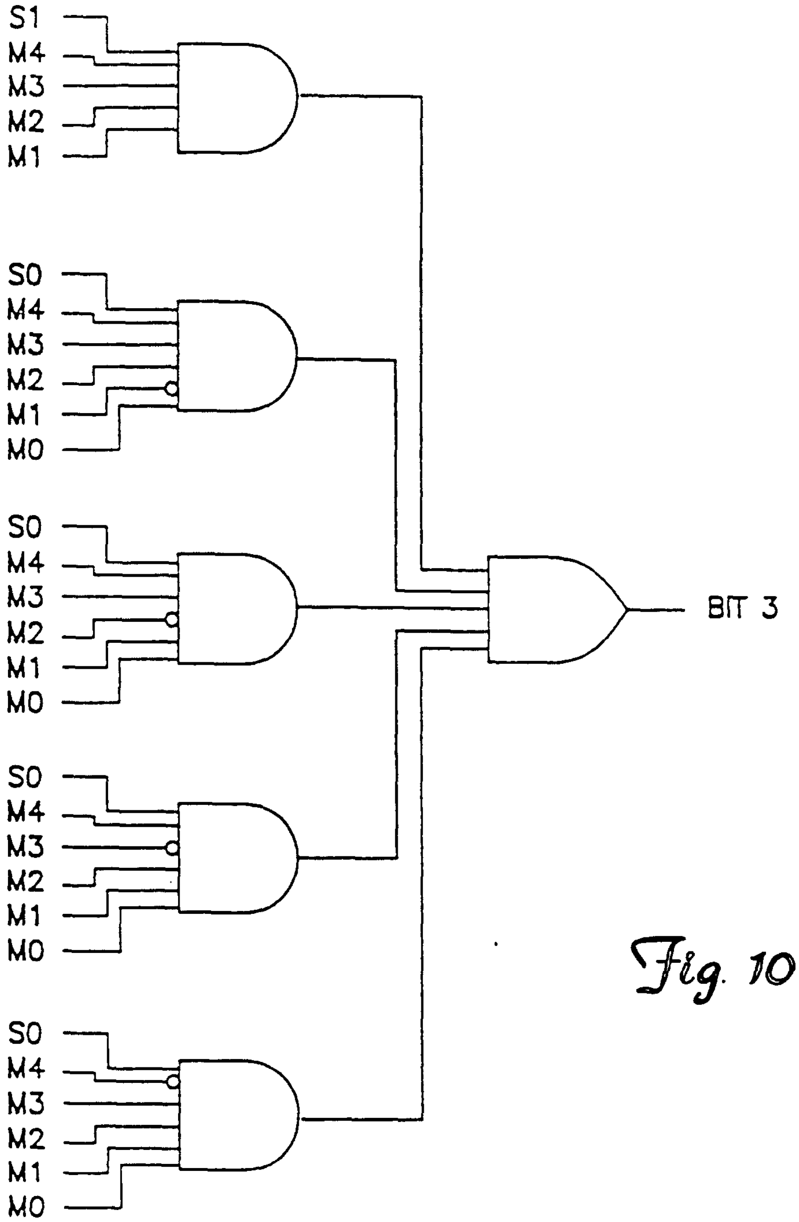


Fig. 10d

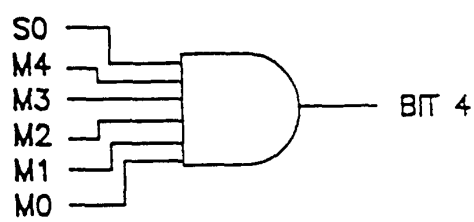


Fig. 10e

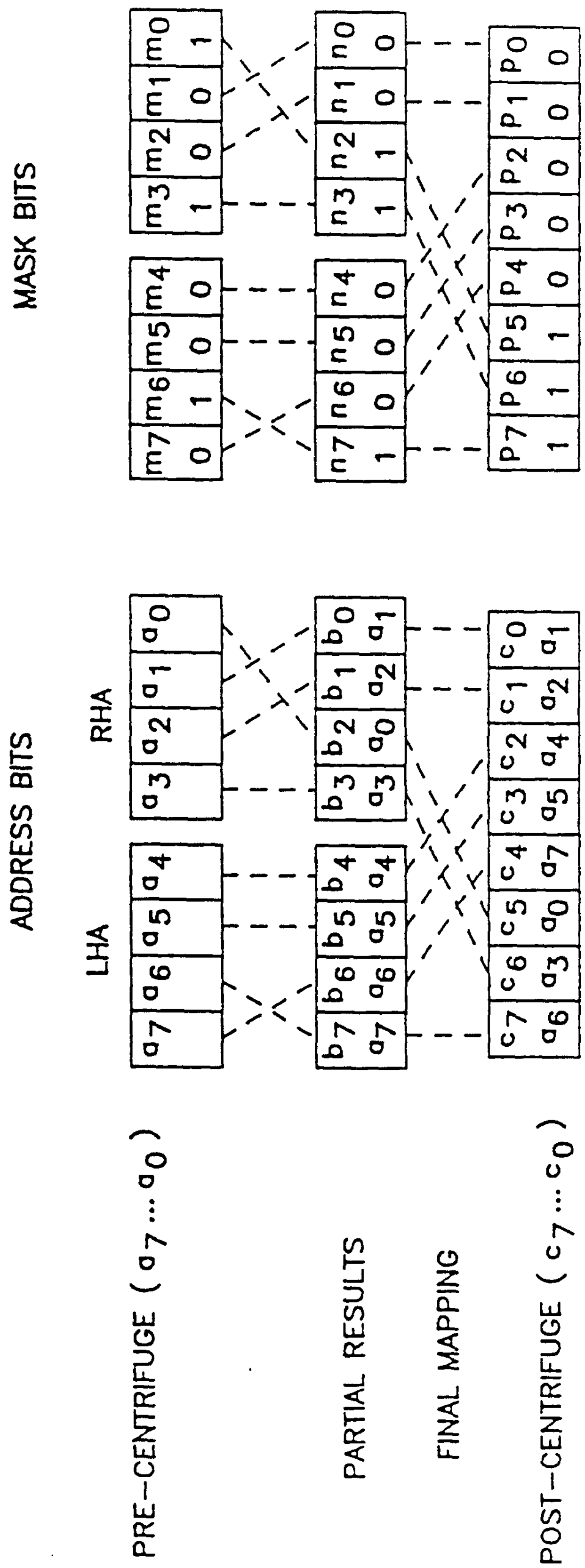
ADDRESS BITS
MASK BITS
LHA
RHA
PRE-CENTRIFUGE ( a7 ... a0 )
PARTIAL RESULTS
FINAL MAPPING
POST-CENTRIFUGE ( c7 ... c0 )
a7 a6 a5 a4 a3 a2 a1 a0
b7 b6 b5 b4 b3 b2 b1 b0
a7 a6 a5 a4 a3 a0 a2 a1
c7 c6 c5 c4 c3 c2 c1 c0
a6 a3 a0 a7 a5 a4 a2 a1
m7 m6 m5 m4 m3 m2 m1 m0
0 1 0 0 1 0 0 1
n7 n6 n5 n4 n3 n2 n1 n0
1 0 0 0 1 1 0 0
P7 P6 P5 P4 P3 P2 P1 P0
1 1 1 0 0 0 0 0

Fig. 11

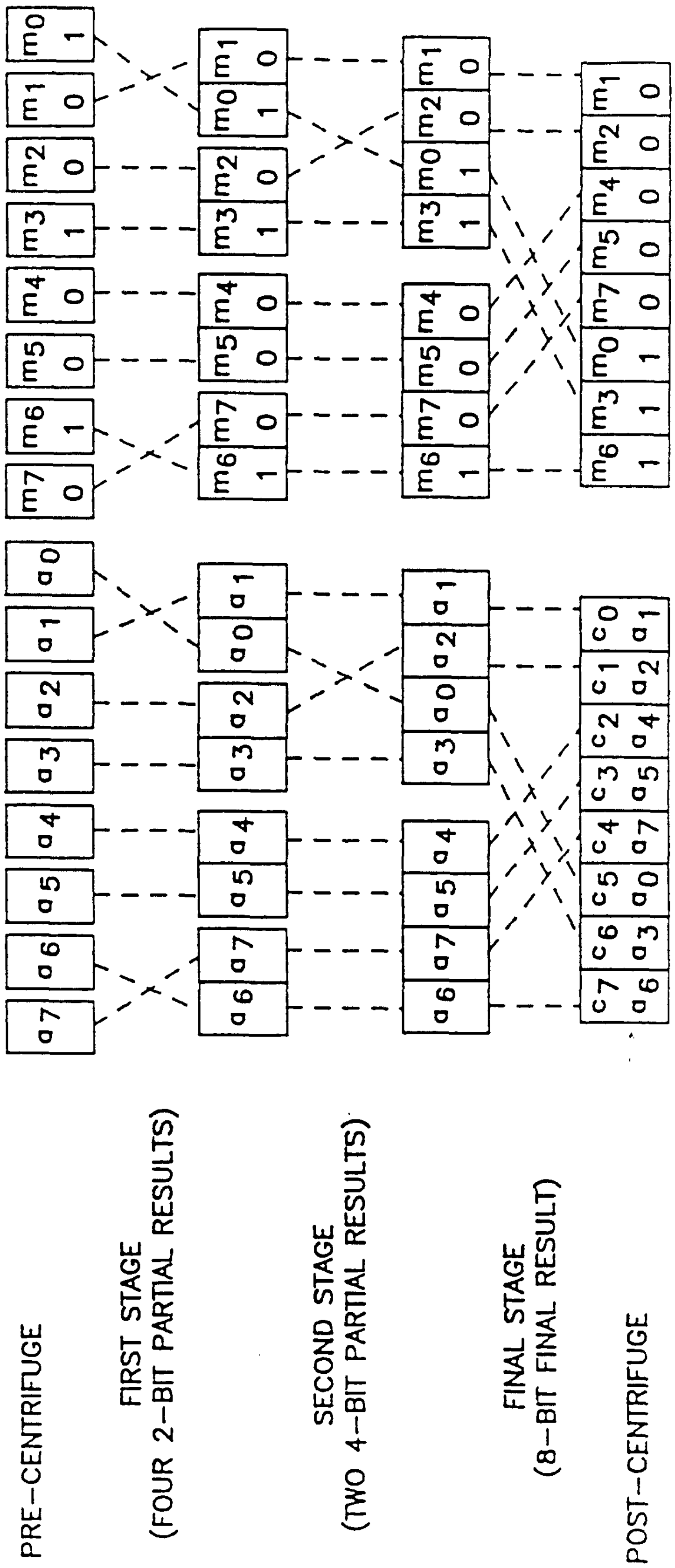
PRE-CENTRIFUGE
FIRST STAGE
(FOUR 2-BIT PARTIAL RESULTS)
SECOND STAGE
(TWO 4-BIT PARTIAL RESULTS)
FINAL STAGE
(8-BIT FINAL RESULT)
POST-CENTRIFUGE

Fig. 12

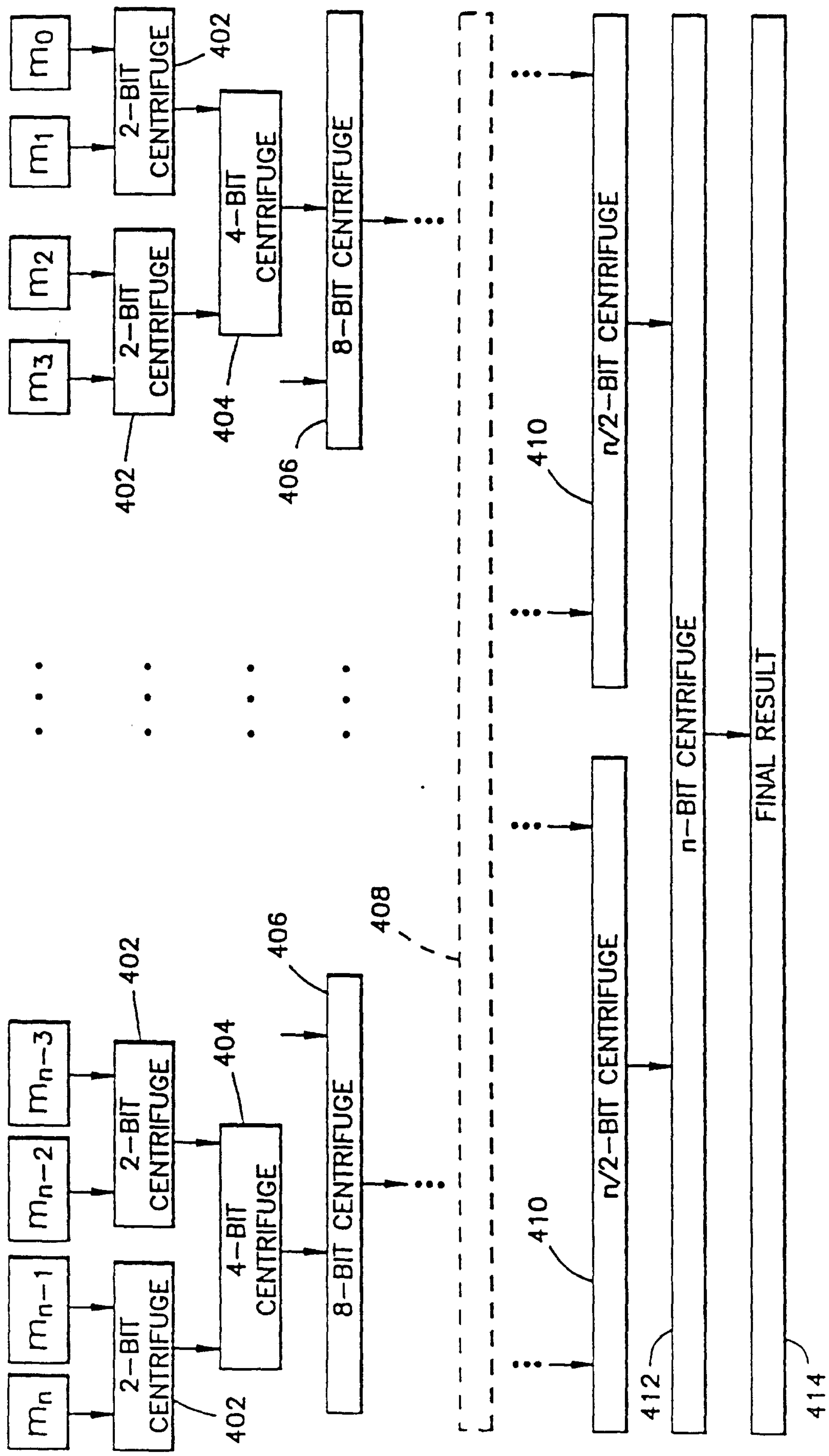
m0
m1
m2
m3
mn
mn-1
mn-2
mn-3
2-BIT CENTRIFUGE
4-BIT CENTRIFUGE
8-BIT CENTRIFUGE
n/2-BIT CENTRIFUGE
n-BIT CENTRIFUGE
FINAL RESULT
402
404
406
408
410
412
414

Fig. 13

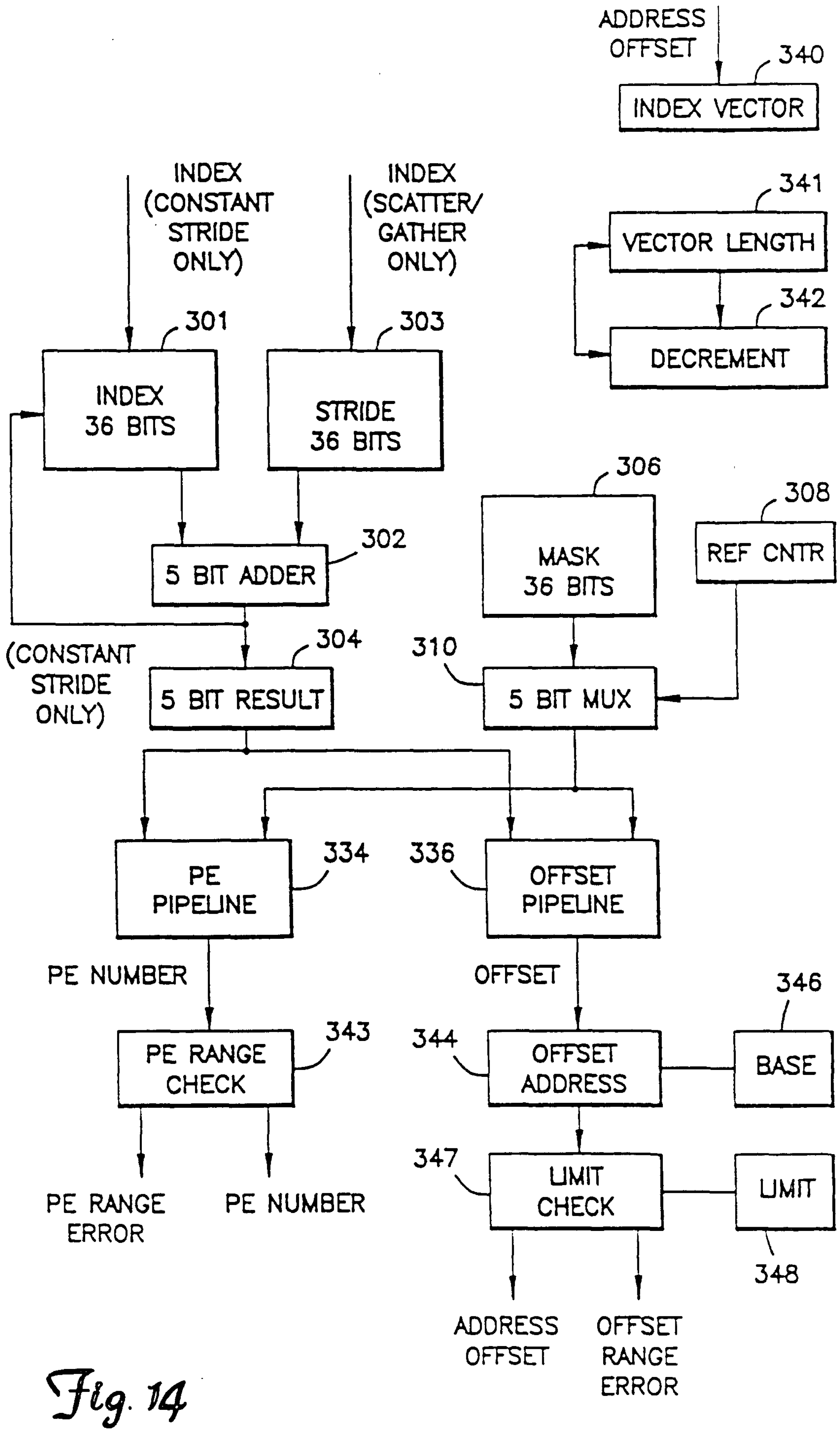
ADDRESS OFFSET
340
INDEX VECTOR
341
VECTOR LENGTH
342
DECREMENT
INDEX (CONSTANT STRIDE ONLY)
INDEX (SCATTER/ GATHER ONLY)
301
303
INDEX 36 BITS
STRIDE 36 BITS
306
308
MASK 36 BITS
REF CNTR
302
5 BIT ADDER
304
310
(CONSTANT STRIDE ONLY)
5 BIT RESULT
5 BIT MUX
334
336
PE PIPELINE
OFFSET PIPELINE
PE NUMBER
OFFSET
346
343
344
PE RANGE CHECK
OFFSET ADDRESS
BASE
347
LIMIT CHECK
LIMIT
348
PE RANGE ERROR
PE NUMBER
ADDRESS OFFSET
OFFSET RANGE ERROR

Fig. 14